# EUROPEAN PATENT SPECIFICATION

(11) **EP 3 533 994 B1**
(45) Date of publication and mention of the grant of the patent: **03.04.2024**
(21) Application number: 19158252.7
(22) Date of filing: 20.02.2019
(51) Int. Cl.: F02N 11/08, H02P 9/48, F02N 11/04, F02N 19/00, F02P 5/04, F02D 41/06, F02P 5/15, F02D 41/34, H02P 21/00, F02P 7/067, F02N 3/00, F02N 3/04

(54) **METHOD FOR CONTROLLING AN ENGINE UNIT FOR A STRADDLED VEHICLE, ENGINE UNIT AND STRADDLED VEHICLE**
VERFAHREN ZUR STEUERUNG EINER MOTOREINHEIT FÜR EIN GRÄTSCHSITZFAHRZEUG, MOTOREINHEIT UND GRÄTSCHSITZFAHRZEUG
PROCÉDÉ DE COMMANDE D'UNE UNITÉ DE MOTEUR POUR VÉHICULE À ENFOURCHER, UNITÉ DE MOTEUR ET VÉHICULE À ENFOURCHER

(30) Priority: 02.03.2018 JP 2018037717; 02.03.2018 JP 2018037718; 08.03.2018 JP 2018042068
(43) Date of publication of application: 04.09.2019
(73) Proprietor: YAMAHA HATSUDOKI KABUSHIKI KAISHA, Iwata-shi, Shizuoka 438-8501 (JP)
(72) Inventor: NISHIKAWA, Takahiro, Iwata-shi, Shizuoka 438-8501 (JP); IDE, Keisuke, Iwata-shi, Shizuoka 438-8501 (JP)
(74) Representative: Grünecker Patent- und Rechtsanwälte PartG mbB

(56) References cited:
- EP-A1- 2 716 896
- EP-A1- 3 147 495
- US-A1- 2008 105 230

## Description

The present invention relates to method for controlling an engine unit for a straddled vehicle, an engine unit and a straddled vehicle.

Prior art document EP 3 147 495 A1 discloses a method for controlling an engine start, being used in a motorcycle. Said method relates to an engine start/stop control which starts an engine or restarts the engine from an idle stop state by means of a starter-generator (ISG). Specifically, upon receipt of a start signal generated by a start button or a throttle actuating device, a crankshaft is reversely rotated, and thereafter it is driven to rotate forward. The forward driving is stopped when a predetermined time is exceeded.

Prior art document EP 2 716 896 A1 discloses an engine control device that is applicable to a saddle-ridden vehicle and that executes an idle stop control. In particular, a swing back control is done after an automatic engine stop, and an engine restart is done upon an operation on a throttle.

Prior art document US 2008/0105230 A1 disclose a method of starting an engine, in which a starter motor (also functioning as a generator) is reversely driven to reversely rotate a crankshaft when a starter switch is turned on, a first fuel injection is performed when the crank angle position reaches a predetermined position during the reverse rotation, and thereafter the starter motor is driven forward to rotate the crankshaft forward to start the engine. Within said prior art, it is pointed out a problem that fuel is accumulated within a cylinder with the starter motor being stopped when the starter switch is turned OFF after the first fuel injection. The solution to the problem is that a start command is issued upon a turning on of the starter switch, and is maintained until an elapsed time from the first fuel injection reaches a set delay time.

JP 2002-332938 A discloses a scooter type motorcycle that includes an engine starter, which, after an engine is stopped, rotates a crankshaft in reverse to a predetermined position to prepare for a subsequent engine start. The vehicle includes a starter-generator (ACG starter) that combines a starter motor and an AC generator. The vehicle has an engine automatic stop/start function (so-called idle stop function), by which the engine is automatically stopped when the vehicle is stopped and the ACG starter is automatically driven to rotate forward to restart the engine when a start operation is performed thereafter. After the engine is started, the ACG starter functions as a generator. When the engine stops, a swing back operation is performed in which the ACG starter is driven to rotate in reverse to rotate the crankshaft in reverse to a position before a compression top dead center in regard to a reverse rotation direction. When the engine is restarted and the forward rotation drive of the ACG starter is begun, the rotation of the crankshaft is sufficiently accelerated in a run-up period up to the compression top dead center and an inertia torque of a rotating system, including the crankshaft, is thereby increased. Use of the inertia torque of the rotating system in addition to the driving torque of the ACG starter is thus enabled. Obtaining of a torque necessary for rotating the crankshaft past the compression top dead center is thereby enabled even if the driving torque of the ACG starter is small. Making of the ACG starter compact is thus enabled.

With the vehicle of JP 2002-332938 A, when the starter switch is depressed, the ACG starter is driven, and when the depression is released, the ACG starter is turned off. Therefore, if an operation time of the starter switch is short, the ACG starter may become turned off before the engine is started. In such a case, the swing back operation becomes necessary to prepare for a subsequent start.

However, because of the swing back operation, time is required from the failure of engine start until beginning of the subsequent start is enabled. Therefore, depending on how the starter switch is operated, a long time may be required until the engine is started to start the vehicle.

It is the object of the present invention to provide a method for controlling an engine unit for a straddled vehicle, an engine unit and a straddled vehicle capable of reducing starting inconvenience due to a swing back operation.

According to the present invention said object is solved by a method for controlling an engine unit for a straddled vehicle having the features of independent claim 1. Moreover, said object is also solved by an engine unit according to claim 10. Moreover, said object is also solved by a straddled vehicle according to claim 11. Preferred embodiments are laid down in the dependent claims.

A preferred embodiment provides an engine unit to be included in a straddled vehicle. The engine unit includes a single-cylinder engine, having a cylinder and a crankshaft. The engine unit includes a rotating electrical machine that is power-transmittably coupled to the crankshaft, and that is used in common as a starter motor for rotating the crankshaft, and as a generator for generating electric power by a rotating force of the crankshaft. The engine unit includes a controller for controlling the engine and the rotating electrical machine. The controller executes, in response to a start trigger operation of an operating member, included in the straddled vehicle, when the engine is in a stopped state, a start cranking control of energizing the rotating electrical machine to drive the crankshaft in a forward rotation direction so as to start the engine. The controller executes, after the engine is stopped and before beginning the drive of the crankshaft in the forward rotation direction, a swing back control of driving the crankshaft in a reverse rotation direction by the rotating electrical machine to rotate the crankshaft in reverse. In the start cranking control, the controller continues the energization of the rotating electrical machine until a predetermined cranking limit time, determined such that the engine begins combustion, elapses, even if the start trigger operation of the operating member is eliminated.

Due to there being limited installation space in the straddled vehicle, the rotating electrical machine that is used in common as the starter motor and the generator is required to be arranged to be as compact as possible. Due to this requirement, it is not possible for a driving torque when the rotating electrical machine is used as the starter motor to be made very large. The swing back operation is thus performed between a point at which the engine is put in the stopped state and a point at which it is started subsequently. Sufficient acceleration of the crankshaft rotation from a swing back position until a compression top dead center position is reached is thus enabled when the engine is started. Passing of the compression top dead center is thereby enabled using both an inertia torque of a rotating system, including the crankshaft, and the driving torque, generated by the rotating electrical machine, thus enabling the engine to be started while using the rotating electrical machine that is compact.

That is, if, when the engine is in the stopped state, a user performs the start trigger operation on the operating member, the rotating electrical machine is energized to start the engine and the crankshaft is driven in the forward rotation direction (cranking). At this point, the crankshaft begins to rotate from the swing back position and therefore securing of satisfactory startability is enabled even with the compact rotating electrical machine. When the engine stops, the swing back control is performed before the drive of the crankshaft in the forward rotation direction is begun subsequently. That is, by the rotating electrical machine, the crankshaft is rotated in the reverse rotation direction and the crankshaft is rotated in reverse to the swing back position.

Once the cranking is started in response to the start trigger operation, even if the start trigger operation is eliminated thereafter, the energization of the rotating electrical machine is continued until elapse of the predetermined cranking limit time, determined such that the engine begins the combustion. The engine is thereby enabled to begin the combustion reliably when the start trigger operation is performed. That is, even when the start trigger operation ends in a short time, the cranking is not stopped, thus enabling the combustion by the engine to begin reliably.

If, when the start trigger operation ends in a short time, the energization of the rotating electrical machine is stopped without the combustion by the engine beginning, the swing back operation would be performed before the engine is started subsequently. A waiting time until the next start thus becomes long. The user is thus compelled to perform the start trigger operation a plurality of times and the waiting time for the swing back operation occurs between the plurality of times of the start trigger operation. Also, even if the combustion by the engine begins, if the energization of the rotating electrical machine is stopped immediately after the beginning of combustion, the combustion becomes unstable and a so-called low idling phenomenon may occur.

On the other hand, with the present preferred embodiment, even if the start trigger operation ends in a short time, the rotating electrical machine continues to drive the crankshaft in the forward rotation direction until the cranking limit time elapses. This enables the combustion by the engine to begin reliably with a single start trigger operation and therefore there is no need to perform the start trigger operation a plurality of times and the waiting time in between also does not occur. Moreover, the cranking is continued until the cranking limit time elapses, thus enabling avoiding of unstable combustion by the engine and avoiding of the occurrence of the so-called low-idling phenomenon.

Reduction of starting inconvenience due to the swing back operation is thus enabled.

The controller may perform the swing back control when the engine is stopped. Alternatively, when the start trigger operation is detected, the controller may perform the swing back control before the rotating electrical machine begins driving the crankshaft in the forward rotation direction.

In a preferred embodiment, in the start cranking control, the controller, in response to the start trigger operation of the operating member when the engine is in the stopped state, energizes the rotating electrical machine to drive the crankshaft in the forward rotation direction to start the engine and, even if the start trigger operation of the operating member is eliminated, continues the energization of the rotating electrical machine until the predetermined cranking limit time elapses, and stops the energization of the rotating electrical machine when the predetermined cranking limit time elapses without the engine beginning the combustion.

With this arrangement, whereas the energization of the rotating electrical machine is continued even if the start trigger operation is eliminated, the energization of the rotating electrical machine is ended when the predetermined cranking limit time elapses without the combustion by the engine beginning. This enables energization time of the rotating electrical machine to be limited to the cranking limit time when a start operation trigger is eliminated. Limiting of energy consumption is thereby enabled.

In a preferred embodiment, if, in the start cranking control, the start trigger operation of the operating member is continued until after the predetermined cranking limit time elapses without the engine beginning the combustion, the controller continues the energization of the rotating electrical machine until the start trigger operation is eliminated.

With this arrangement, as long as the start trigger operation is continued, the energization of the rotating electrical machine is continued even after the elapse of the predetermined cranking limit time. Cranking for a long time in accordance with an intention of the user is thereby enabled. For example, when an air temperature is low, cranking for a long time may be required until the combustion by the engine begins. Allowing of cranking for a long time in accordance with the intention of the user is enabled in such cases.

in a preferred embodiment, the operating member includes a starter switch operated by an operator to start the engine. The start trigger operation is, for example, a continuous operation of the starter switch that reaches a predetermined time or exceeds the predetermined time.

With this arrangement, when the continuous operation of the starter switch that reaches or exceeds the predetermined time is performed, the energization of the rotating electrical machine is begun and the crankshaft is driven in the forward rotation direction to start the engine. If a continuous operation time of the starter switch does not reach the predetermined time, the operation is not deemed to be the start trigger operation. Therefore, even if the user operates the starter switch inadvertently, cranking does not begin. That is, by the continuous operating time of the starter switch reaching or exceeding the predetermined time, it is judged that the user has the intention to start the engine and the cranking begins. This enables the cranking to be performed in reflection of the user's intention.

in a preferred embodiment, the cranking is performed until elapse of the cranking limit time, determined such that the combustion by the engine begins. Therefore, if the cranking is performed when the user operates the starter switch inadvertently, cranking and engine start that are not desired by the user may be performed. Thus, by starting the cranking on condition of the continuous operation of the starter switch that reaches or exceeds the predetermined time, avoiding of the undesired cranking and engine start is enabled. This enables unnecessary energy consumption to be avoided.

In a preferred embodiment, the controller executes an idle stop control of stopping the combustion by the engine to enter an idle stop state when an idle stop condition is established. The operating member may include a throttle operating member that is operated by the operator to operate a throttle of the engine. The start trigger operation may include a predetermined restart trigger operation of the throttle operating member by the operator. The start cranking control may include a restart cranking control of responding to the restart trigger operation of the throttle operating member in the idle stop state.

When the engine is stopped by the idle stop control, the swing back control is performed before the crankshaft is driven in the forward rotation direction by the rotating electrical machine subsequently. When the user then performs the restart trigger operation on the throttle operating member in the idle stop state, the cranking is performed. Even if the user interrupts the restart trigger operation before the beginning of the combustion by the engine, the cranking is continued until the cranking limit time elapses. This enables engine restart from the idle stop to be performed reliably.

If the cranking is stopped when the restart trigger operation is interrupted before the beginning of the combustion by the engine, the swing back operation is performed before the engine is restarted subsequently. A waiting time until the next restart thus becomes long. The user is thus compelled to perform the restart trigger operation a plurality of times and the waiting time for the swing back occurs between the plurality of times of the restart trigger operation.

On the other hand, with the present preferred embodiment, even if the restart trigger operation ends in a short time, the cranking is continued until elapse of the cranking limit time, determined such that the engine begins the combustion. This enables the engine to be restarted reliably with a single restart trigger operation. There is thus no need to perform the restart trigger operation a plurality of times and the waiting time in between also does not occur.

Avoiding of delay of restart due to the swing back operation is thus enabled.

In a preferred embodiment, the controller executes the swing back control when start of the engine by the start cranking control fails.

With this arrangement, even when the start of the engine fails, beginning of rotation of the crankshaft from the swing back position is enabled in a subsequent start. Start of the engine using the inertia torque of the rotating system, including the crankshaft, is thereby enabled.

In a preferred embodiment, a rotor that rotates together with the rotation of the crankshaft, a plurality of detected portions located on the rotor at intervals in a rotation direction, and an electromagnetic pickup, having a detection region in a region through which the plurality of detected portions pass for generating detection signals in accompaniment with passage of the detected portions through the detection region, are included. The controller executes a position specifying processing of specifying a position of the crankshaft using the detection signals generated by the electromagnetic pickup and an engine control of controlling running of the engine using the position specified by the position specifying processing.

With this arrangement, rotation information of the rotor of the rotating electrical machine, that is, position information of the crankshaft is acquired using the electromagnetic pickup, and therefore the arrangement is inexpensive in comparison to a case of using a position sensor, such as a Hall IC. On the other hand, position specifying based on the detection signals of the electromagnetic pickup takes time. In particular, the time it takes for the position specifying of the crankshaft to be enabled from a state where the engine is stopped is long in comparison to a case of using a position sensor, such as a Hall IC. Accordingly, the time it takes for the control of the running of the engine to be enabled from the beginning of rotation of the crankshaft is long.

If, when the start trigger operation ends in a short time, the energization of the rotating electrical machine is stopped without the combustion by the engine beginning, the swing back operation would be performed before the engine is started subsequently. In addition, there is also a waiting time for a combustion control of the engine to be started following the position specifying based on the detection signals of the electromagnetic pickup. The user is thus compelled to perform the start trigger operation a plurality of times and the waiting time for the swing back operation and the position specifying occurs between the plurality of times of the start trigger operation.

On the other hand, with the present preferred embodiment, even if the start trigger operation ends in a short time, the rotating electrical machine continues to drive the crankshaft in the forward rotation direction until the cranking limit time, determined such that the engine begins the combustion, elapses. This enables the combustion by the engine to begin reliably with a single start trigger operation and therefore there is no need to perform the start trigger operation a plurality of times and a long waiting time such as mentioned above also does not occur. Reduction of starting inconvenience due to the swing back operation is thus enabled despite being an inexpensive arrangement that uses the electromagnetic pickup.

In a preferred embodiment, the engine is a single-cylinder, four-stroke engine. In the engine control, the controller controls the running of the engine based on stroke identification using the position specifying processing.

With the single-cylinder, four-stroke engine, variation of a load torque during cranking is large and the load torque becomes highest in a vicinity of the compression top dead center position. Thus, by performing the swing back operation, performing of cranking past the compression top dead center is enabled even with a low-power rotating electrical machine.

On the other hand, a four-stroke engine has an intake stroke, a compression stroke, an expansion stroke, and an exhaust stroke in one combustion cycle. By identification of the strokes, appropriate control of the running of the engine is enabled. Meanwhile, the time for the stroke identification is long because the position specifying using the detection signals of the electromagnetic pickup takes time. Accordingly, start of the engine takes time.

With the present preferred embodiment, once the cranking is started in response to the start trigger operation, even if the start trigger operation is eliminated, the cranking is continued until the elapse of the cranking limit time, determined such that the engine begins the combustion. The start of the engine reliably with a single start trigger operation is thus enabled. This enables repetition of cranking to be avoided as much as possible and therefore enables reduction of starting inconvenience due to the use of the electromagnetic pickup.

In a preferred embodiment, the plurality of detected portions are arranged such that the electromagnetic pickup generates a reference detection signal at a predetermined reference crank position. In the position specifying processing, the controller specifies the position of the crankshaft based on the reference detection signal generated by the electromagnetic pickup after the crankshaft begins to rotate in the forward rotation direction.

With this arrangement, the position specifying of the crankshaft is enabled after the electromagnetic pickup generates the reference detection signal. It thus takes time for the stroke identification to be enabled. With the present preferred embodiment, once the cranking is started, even if the start trigger operation is eliminated, the cranking is continued until the elapse of the cranking limit time, determined such that the engine begins the combustion, therefore enabling repetition of the start operation to be avoided. This thus enables a waiting time due to the repetition of the start operation to be avoided as well. By the above, even if it takes time for the stroke identification to be enabled, the user is made to wait for that time just once and therefore there is no practical inconvenience.

In a preferred embodiment, in the swing back control, the controller makes the crankshaft rotate in reverse to a predetermined swing back position based on the position specified by the position specifying processing.

With this arrangement, the swing back operation is enabled to be performed accurately using the position specifying processing using the electromagnetic pickup. This enables the crankshaft to begin rotating and accelerating reliably from the swing back position in starting the engine and therefore enables the engine to be started reliably. This enables repetition of the start to be avoided.

A preferred embodiment provides a straddled vehicle that includes a straddled vehicle engine unit having features such as described above. The straddled vehicle includes a wheel to which the rotation of the crankshaft is transmitted. The straddled vehicle includes a straddled seat.

With this arrangement, realization of the straddled vehicle capable of reducing starting inconvenience due to the swing back operation is enabled.

The above and other elements, features, steps, characteristics and advantages of the present teaching will become more apparent from the following detailed description of the preferred embodiments with reference to the attached drawings.

### BRIEF DESCRIPTION OF THE DRAWINGS

FIG. 1 is a side view of an outline of a straddled vehicle.
FIG. 2 is a schematic partial sectional view of the general arrangement of an engine unit included in the straddled vehicle.
FIG. 3 is a sectional view of a rotating electrical machine included in the engine unit.
FIG. 4 is a block diagram of the electrical configuration of the straddled vehicle that includes the engine unit.
FIG. 5 is a flowchart for describing an example of control processing from an engine start to an engine stop.
FIG. 6 is a flowchart for describing an example of a start cranking control.
FIG. 7 is a flowchart for describing an example of a swing back control.
FIG. 8 is a flowchart for describing an example of control processing accompanying a restart from an idle stop state.
FIG. 9 is a flowchart for describing an example of a restart cranking control.
FIG. 10A is a diagram for describing an example of operations in an ordinary start.
FIG. 10B is a diagram for describing the example of operations in the ordinary start and illustrates operations subsequent to the operations of FIG. 10A.
FIG. 11 is a diagram for describing an example of operations in the restart from the idle stop state.
FIG. 12A to 12E show examples of cranking operations by the start cranking control.

### DETAILED DESCRIPTION OF THE PREFERRED EMBODIMENTS

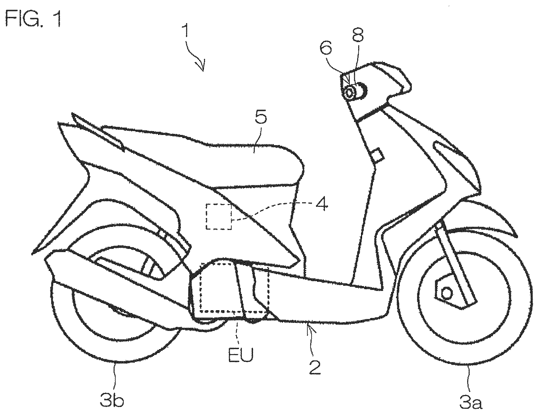

FIG. 1 is a side view of an outline of a straddled vehicle. The straddled vehicle 1 includes an engine unit EU, a body 2, wheels 3a and 3b, a battery 4, and a straddled type seat 5. The engine unit EU, the battery 4, and the seat 5 are supported by the body 2. The wheels 3a and 3b are rotatably supported respectively at a front portion and a rear portion of the body 2. The engine unit EU drives the wheel 3b (the rear wheel in the present preferred embodiment), which is a drive wheel, and makes the wheel 3b rotate to make the straddled vehicle 1 travel. The wheel 3a (front wheel) is a driven wheel in the present preferred embodiment. A handlebar 6, pivotable to the right and left, is supported by the front portion of the body 2. The wheel 3a pivots to the right and left in accordance with the pivoting of the handlebar 6. An accelerator operating member 8 (accelerator grip) is located at one end, the right end in the present preferred embodiment, of the handlebar 6. The accelerator operating member 8 is pivotally operably mounted to an end portion of the handlebar 6. The accelerator operating member 8 is an example of a throttle operating member that is operated by a user to operate a throttle of the engine unit EU.

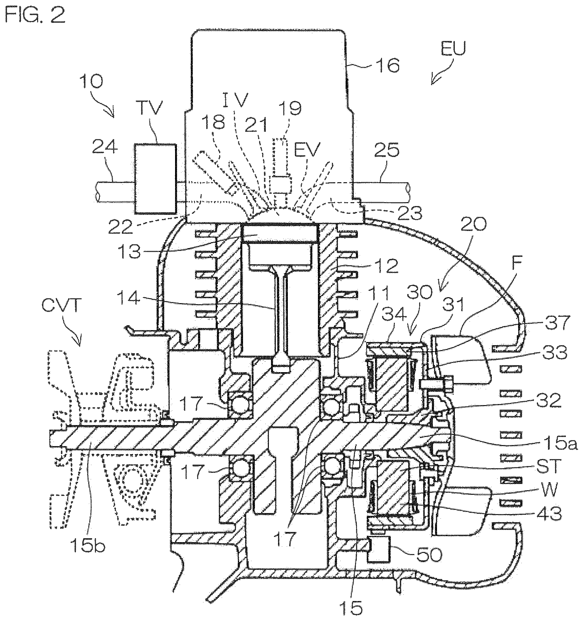

FIG. 2 is a schematic partial sectional view of the general arrangement of the engine unit EU. The engine unit EU is a four-stroke engine unit for vehicle and more specifically is an engine unit installable on the straddled vehicle 1.

The engine unit EU includes a four-stroke, single-cylinder engine 10 and a rotating electrical machine 20. The four-stroke, single-cylinder engine 10 (hereinafter referred to as the "engine 10") is a single-cylinder, four-stroke engine having one cylinder.

The engine 10 includes a crankcase 11, a cylinder 12, a piston 13, a connecting rod 14, and a crankshaft 15.

The piston 13 is provided to be freely reciprocally movable inside the cylinder 12. The crankshaft 15 is provided to be rotatable inside the crankcase 11. The connecting rod 14 connects the piston 13 and the crankshaft 15 and transmits a reciprocating motion of the piston 13 to the crankshaft 15. The crankshaft 15 is freely rotatably supported by the crankcase 11 through a pair of bearings 17.

The rotating electrical machine 20 is mounted to one end portion 15a of the crankshaft 15. The rotating electrical machine 20 is thereby power-transmittably coupled to the crankshaft 15. A transmission CVT is mounted to another end portion 15b of the crankshaft 15. The transmission CVT changes a shift ratio, which is a ratio of an output rotational speed with respect to an input rotational speed.

A cylinder head 16 is mounted to an upper portion of the cylinder 12. A combustion chamber 21 is defined by the cylinder 12, the cylinder head 16, and the piston 13. The cylinder head 16 is provided with an intake valve IV, a fuel injector 18, a spark plug 19, and an exhaust valve EV. An intake passage 22 and an exhaust passage 23 that are in communication with the combustion chamber 21 are formed in the cylinder head 16. The intake valve IV opens and closes the intake passage 22 and the exhaust valve EV opens and closes the exhaust passage 23.

The fuel injector 18 injects a fuel to supply the fuel into the combustion chamber 21. The intake valve IV controls inflow of air into the combustion chamber 21. The intake valve IV and the exhaust valve EV open and close in accordance with a position of the crankshaft 15. By being put in an opened state, the intake valve IV supplies air containing the fuel to the combustion chamber 21. The spark plug 19 is located to face the combustion chamber 21 and generates a spark discharge inside the combustion chamber 21 to ignite a gaseous mixture of the air and the fuel introduced into the combustion chamber 21. By being put in an opened state, the exhaust valve EV discharges exhaust after combustion from the cylinder 12 to an exhaust pipe 25.

A throttle valve TV is located at an intake pipe 24 connected to the intake passage 22. The throttle valve TV adjusts an amount of the air supplied to the combustion chamber 21. An opening degree of the throttle valve TV is adjusted in accordance with the operation of the accelerator operating member 8 (see FIG. 1).

Once each of an intake stroke, a compression stroke, an expansion stroke, and an exhaust stroke are included in one combustion cycle of the engine 10. In the intake stroke, the intake valve IV is opened and the piston 13 moves toward a bottom dead center. In the meantime, the fuel injector 18 injects the fuel. The gaseous mixture of the air and the fuel is thereby sucked into the combustion chamber 21. In the compression stroke, the piston 13 moves toward a top dead center (compression top dead center) in a state where the intake valve IV is closed and the gaseous mixture inside the combustion chamber 21 is thereby compressed. The spark plug 19 performs spark discharge when the piston 13 is in a vicinity of the compression top dead center position. The gaseous mixture is thereby ignited and expands, causing the expansion stroke of moving the piston 13 toward the bottom dead center. In the exhaust stroke, the exhaust valve EV is opened, the piston 13 moves toward the top dead center (exhaust top dead center), and the exhaust gas is thereby discharged to the exhaust pipe 25.

The engine 10 outputs a rotating force through the crankshaft 15. The rotating force of the crankshaft 15 is transmitted through the transmission CVT to the wheel 3b (see FIG. 1). The straddled vehicle 1 (see FIG. 1) is driven by the wheel 3b that receives the rotating force, output from the engine 10, through the crankshaft 15.

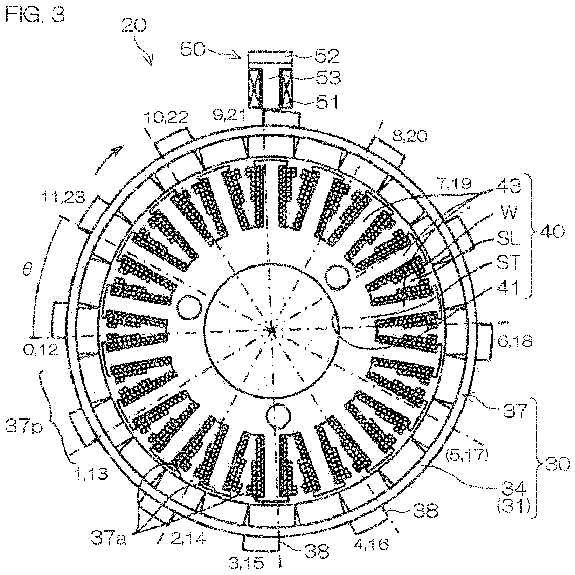

FIG. 3 is a sectional view showing a section perpendicular to a rotational axis of the rotating electrical machine 20 shown in FIG. 2. The rotating electrical machine 20 is a permanent magnet type rotating electrical machine and more specifically is a permanent magnet type three-phase brushless generator. Further, the rotating electrical machine 20 also functions as a permanent magnet type three-phase brushless motor.

The rotating electrical machine 20 has a rotor 30 and a stator 40. The rotating electrical machine 20 is of a radial gap type in the present preferred embodiment. Also, in the present preferred embodiment, the rotating electrical machine 20 is of an outer rotor type. That is, the rotor 30 is an outer rotor and the stator 40 is an inner stator.

As illustrated in FIG. 2 and FIG. 3, the rotor 30 has a rotor main body portion 31. The rotor main body portion 31 is constituted, for example, of a ferromagnetic material. The rotor main body portion 31 is arranged to have a bottomed cylindrical shape. The rotor main body portion 31 has a cylindrical boss portion 32, a disk-shaped bottom wall portion 33, and a cylindrical back yoke portion 34. The bottom wall portion 33 and the back yoke portion 34 are formed integrally. The bottom wall portion 33 and the back yoke portion 34 are fixed to the crankshaft 15 through the cylindrical boss portion 32. The rotor 30 thus rotates together with the crankshaft 15. The rotor 30 is not provided with a winding supplied with an electric current. The bottom wall portion 33 is provided with a cooling fan F.

The rotor 30 has a permanent magnet portion 37. The rotor 30 has a plurality of magnetic pole portions 37a. in the present preferred embodiment, the plurality of magnetic pole portions 37a are formed of the permanent magnet portion 37. The plurality of magnetic pole portions 37a are provided at an inner periphery of the back yoke portion 34. In the present preferred embodiment, the permanent magnet portion 37 has a plurality of permanent magnets. The plurality of magnetic pole portions 37a are respectively provided at the plurality of permanent magnets. The permanent magnet portion 37 may however be formed of one annular permanent magnet instead. In this case, the one permanent magnet is magnetized such that the plurality of magnetic pole portions 37a are aligned along an inner peripheral surface.

The plurality of magnetic pole portions 37a are provided such that N poles and S poles are located alternately on the inner peripheral surface along a peripheral direction of the rotor 30 (more specifically, the back yoke portion 34). Magnetic pole portions 37a that are mutually adjacent in the peripheral direction form a magnetic pole portion pair 37p. In the present preferred embodiment, the number of magnetic poles of the rotor 30 facing the stator 40 is 24. Twelve magnetic pole portion pairs 37p are thus provided. The number of magnetic poles of the rotor 30 refers to the number of magnetic poles facing the stator 40. The permanent magnet of the rotor 30 and the stator 40 face each other across an air gap. The magnetic pole portions 37a are provided at an outer side of the stator 40 in a radial direction of the rotating electrical machine 20. The back yoke portion 34 is provided at outer sides of the magnetic pole portion 37a in the radial direction. The rotating electrical machine 20 has the magnetic pole portions 37a of a larger number than teeth 43 of the stator 40.

The stator 40 has a stator core ST and a plurality of stator windings W. The stator core ST has a plurality of the teeth 43 provided radially at intervals (equal intervals in the present preferred embodiment) in the peripheral direction. The plurality of teeth 43 extend integrally from the stator core ST toward a radially outer side. In the present preferred embodiment, a total of eighteen teeth 43 are provided at intervals in the peripheral direction. Slots SL are formed between adjacent teeth 43. The stator core ST thus has a total of eighteen slots SL formed at intervals in the peripheral direction. As mentioned above, the rotor 30 has the magnetic pole portions 37a of the larger number than the teeth 43. The number of the magnetic pole portions 37a is 4/3 of the number of slots.

The stator windings W are wound around peripheries of the respective teeth 43. That is, the stator windings W of a plurality phases are provided such as to pass through the slots SL. A state where the stator windings W are inside the slots SL is shown in FIG. 3. Each of the stator windings W of the plurality of phases is a winding of any of a U phase, a V phase, and a W phase. The stator windings W are located, for example, such as to be aligned in the order of the U phase, the V phase, and the W phase in the peripheral direction.

A plurality (eleven in the present preferred embodiment) of detected portions 38, for detection of a rotational position of the rotor 30, are provided on an outer surface of the rotor 30. The plurality of detected portions 38 are detected by a magnetic action. The plurality of detected portions 38 are provided on the outer surface of the rotor 30 at intervals in the peripheral direction. The detected portions 38 are formed of a ferromagnetic material.

Numbers "0" to "23," respectively allocated to positions of the eleven detected portions 38 and an omitted position, at which a detected portion 38 is not provided, are shown in FIG. 3. The numbers are allocated for one combustion cycle of the engine 10, that is, for two rotations of the rotor 30, and each expresses a position of the crankshaft 15 in one combustion cycle. Specifically, each of the numbers "0" to "11" expresses a position of the crankshaft 15 in the first rotation and each of the numbers "12" to "23" expresses a position of the crankshaft 15 during the second rotation.

An electromagnetic pickup 50 is used as a rotor position detector that detects the rotational position of the rotor 30. The electromagnetic pickup 50 is provided at a position facing the plurality of detected portions 38. The electromagnetic pickup 50 includes a pickup coil 51 that magnetically detects each detected portion 38. The electromagnetic pickup 50 further includes a detecting magnet 52 and a core 53. When the detected portion 38 of the number "0" passes through a position facing the electromagnetic pickup 50, the crankshaft 15 is at the compression top dead center or a position in a vicinity of the compression top dead center. When the detected portion 38 of the number "12" passes through the position facing the electromagnetic pickup 50, the crankshaft 15 is at the exhaust top dead center or a position in a vicinity of the exhaust top dead center.

The rotating electrical machine 20 is coupled to the crankshaft 15 of the engine 10. Specifically, the rotor 30 is coupled to the crankshaft 15 such as to rotate at a fixed speed ratio with respect to the crankshaft 15.

In the present preferred embodiment, the rotor 30 is mounted to the crankshaft 15 without interposition of a power transmission mechanism (for example, a belt, chain, gear, speed reducer, speed increaser, etc.). The rotor 30 rotates at a speed ratio of 1:1 with respect to the crankshaft 15. The rotating electrical machine 20 is arranged such that the rotor 30 rotates in a forward rotation direction during combustion operation of the engine 10.

In an engine start, the rotating electrical machine 20 functions as a starter motor that rotates the crankshaft 15 in the forward rotation direction to start the engine 10. When the engine 10 performs the combustion operation, the rotating electrical machine 20 functions as a generator that is driven by the engine 10 to generate electric power. That is, the rotating electrical machine 20 has both a function of rotating the crankshaft 15 in the forward rotation direction to start the engine 10 and a function of being driven by the engine 10 to generate electric power when the engine 10 performs the combustion operation.

The rotating electrical machine 20 is driven by a battery 4 (see FIG. 1), included in the straddled vehicle 1, to apply a force for rotation to the crankshaft 15. More specifically, the rotating electrical machine 20 is able to rotatingly drive the crankshaft 15 in the forward rotation direction and rotatingly drive it in a reverse rotation direction. Further, the rotating electrical machine 20 is also enabled to be driven by the battery 4 to apply a force in a direction reverse to the rotation direction of the crankshaft 15, that is, to apply a braking force.

The plurality of detected portions 38 are aligned at intervals along the rotation direction of the rotor 30 on the outer surface of the rotor 30. The electromagnetic pickup 50 has a detection region at the position of successively facing the plurality of detected portions 38 in accompaniment with the rotation of the rotor 30. That is, the electromagnetic pickup 50 is located to face the detection region into which the plurality of detected portions 38 enter successively during the rotation of the rotor 30.

To describe further specifically, the detected portions 38 are provided on the rotor 30 at angular intervals, each of 30 degrees. Alternate long and short dashed lines in FIG. 3 indicate the angular intervals at which the detected portions 38 are provided. Mutually adjacent detected portions 38 are located with respect to each other at the angular interval forming a measurement angle θ. In the present preferred embodiment, the measurement angle θ is 30 degrees.

The electromagnetic pickup 50 detects one of the plurality of detected portions 38 each time the rotor 30 rotates by the measurement angle θ. The electromagnetic pickup 50 outputs a detection signal each time it detects a detected portion 38. More accurately, by a detected portion 38 moving past the detection region, an electromotive force is generated in the pickup coil 51 due to electromagnetic induction, and a detection signal is generated thereby. That is, the electromagnetic pickup 50 outputs the detection signals upon detecting the movement of the detection portions 38 passing through the detection region.

In the present preferred embodiment, each detected portion 38 corresponds to one magnetic pole portion pair 37p. The plurality of detected portions 38 have the same relative positional relationship with respect to the respectively corresponding magnetic pole portion pairs 37p.

In the present preferred embodiment, the eleven detected portions 38 are provided on the rotor 30. The eleven detected portions 38 are respectively provided on the rotor 30 at eleven of the twelve positions located on the rotor 30 at intervals of the measurement angle θ. Specifically, the detected portions 38 are located at the eleven locations of the numbers "0" to "4" and "6" to "11" (or "12" to "16" and "18" to "23"). The number "5" (or "17") expresses the omitted position at which a detected portion 38 is not located.

The plurality of detected portions 38 are positioned at equal intervals or at practically equal intervals in a peripheral direction of the crankshaft 15. An angular interval 2θ, between the two detected portions 38 located at the two positions (the two positions of the numbers "4" and "6" or the two positions of the numbers "16" and "18") that are mutually adjacent in the peripheral direction across the omitted position (the number "5" or "17"), is twice the measurement angle θ. Detection of a reference position (reference crank position) in one rotation of the crankshaft 15 is enabled because one of the plurality of intervals formed by the plurality of detected portions 38 differs thus from the other intervals. A detection signal, generated by the electromagnetic pickup 50 in correspondence to the reference position, that is, the omitted position that is assigned the number "5" and "17," is a reference detection signal.

in the description that follows, a rotational position of the crankshaft 15 (crank position) may in some cases be expressed using the number of a detected portion 38. For example, when a position "9" is mentioned, it refers to the rotational position of the crankshaft 15 in a state where the detected portion 38 of the number "9" is detected by the electromagnetic pickup 50 (see FIG. 3).

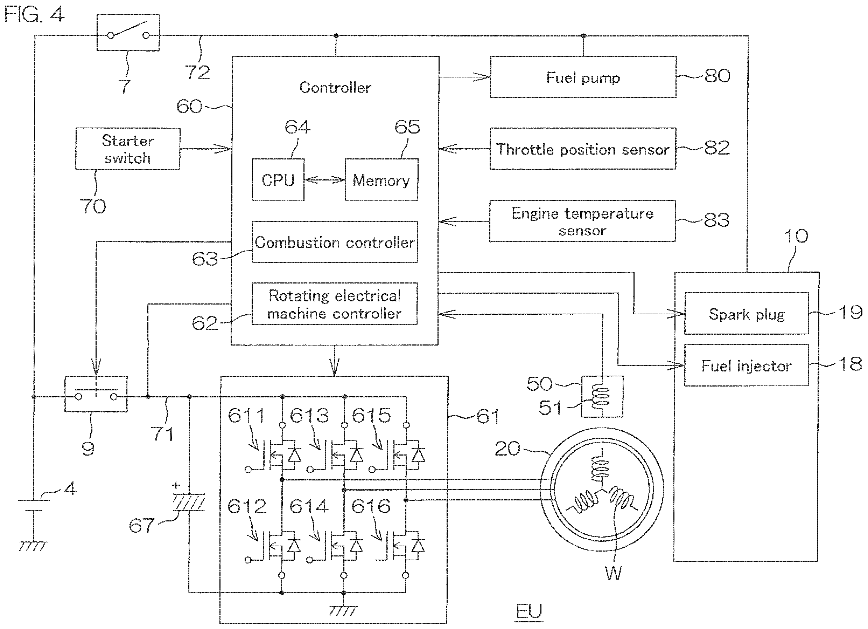

FIG. 4 is a block diagram of the general electrical configuration of the straddled vehicle 1 that includes the engine unit EU. The engine unit EU is provided with a controller 60 and an inverter 61. The controller 60 controls respective portions of the straddled vehicle 1, including the inverter 61.

The rotating electrical machine 20 and the battery 4 are connected to the inverter 61. When the rotating electrical machine 20 functions as the generator, the electric power generated by the rotating electrical machine 20 is supplied to the battery 4 through the inverter 61 and through a power supply line 71. The battery 4 is thereby charged by the electric power generated by the rotating electrical machine 20. When the rotating electrical machine 20 is used as the starter motor, the battery 4 supplies electric power to the rotating electrical machine 20 from the power supply line 71 and through the inverter 61. A main relay 9 is interposed in the power supply line 71. The battery 4 is thus connected to the inverter 61 through the main relay 9. The main relay 9 is opened and closed by the controller 60.

The inverter 61 includes a plurality (for example, six) of switching devices 611 to 616. The switching devices 611 to 616 constitute a three-phase bridge inverter. The stator windings W are connected to the switching devices 611 to 616. The plurality of switching devices 611 to 616 are connected to the respective phases of the stator windings W of the plurality of phases. In more detail, of the plurality of switching devices 611 to 616, two switching devices that are connected in series constitute a half bridge. The half bridges of the respective phases are connected in parallel with respect to the battery 4. The switching devices 611 to 616 constituting the half bridges of the respective phases are respectively connected to the respective phases of the stator windings W of the plurality of phases. Each of the switching devices 611 to 616 is, for example, a transistor and, in more detail, is an FET (field effect transistor) or an IGBT (insulated gate bipolar transistor), etc.

The switching devices 611 to 616 control passing and interruption of current between the stator windings W of the plurality of phases and the battery 4.

When the rotating electrical machine 20 functions as the motor, respective energization and stop of energization of the stator windings W of the plurality of phases are switched by on/off of the switching devices 611 to 616.

When the rotating electrical machine 20 functions as the generator, switching between passing and interruption of current between each of the stator windings W and the battery 4 is performed by on/off operations of the switching devices 611 to 616. Rectification and voltage control of the three-phase AC output from the rotating electrical machine 20 are performed by successively switching on/off the switching devices 611 to 616. The switching devices 611 to 616 thus control the current output from the rotating electrical machine 20 to the battery 4 and electric components.

In such a power generation operation, a capacitor 67 connected to the power supply line 71 smoothens the voltage led out to the power supply line 71 when the rotating electrical machine 20 performs the power generation operation.

The controller 60 is connected to and controls the fuel injector 18 and the spark plug 19, which are the electric components included in the engine 10. Also, the controller 60 is connected to and controls operation of a fuel pump 80. The fuel pump 80 supplies fuel from an unillustrated fuel tank to the fuel injector 18.

Also, the electromagnetic pickup 50 is connected to and the detection signals generated by the electromagnetic pickup 50 are input into the controller 60. Further, a throttle position sensor 82 and an engine temperature sensor 83 are connected to and detection signals of the throttle position sensor 82 and the engine temperature sensor 83 are input into the controller 60. The throttle position sensor 82 detects a valve position, that is, the throttle opening of the throttle valve TV. The throttle valve TV is operated by the accelerator operating member 8 and therefore the throttle position sensor 82 is able to detect the operation of the accelerator operating member 8. The engine temperature sensor 83 detects a temperature of the engine 10 as an engine temperature. The engine temperature sensor 83 is located in a vicinity of the engine 10. If the engine 10 is a water-cooled engine, the engine temperature sensor 83 may detect a temperature of cooling water as an alternate index of an engine temperature.

Further, a starter switch 70, operated by the user in starting the engine 10, is connected to the controller 60. Upon detecting operation of the starter switch 70, the controller 60 executes a start cranking control that includes drive of the rotating electrical machine 20.

The electric power of the battery 4 is supplied through a power supply line 72 to the controller 60 and further supplied to the electric components, such as the fuel pump 80, the fuel injector 18, the spark plug 19, etc. A main switch 7 is interposed in the power supply line 72. The main switch 7 is a switch that is operated to be conducting by the user in beginning use of the straddled vehicle 1 and operated to be interrupted by the user in ending the use of the straddled vehicle 1.

When the main switch 7 is made conducting, the controller 60, the fuel pump 80, the fuel injector 18, the spark plug 19, etc., are connected to the battery 4 and made operable. Also, if, when the main switch 7 is conducting, the main relay 9 is also conducting, the electric power generated by the rotating electrical machine 20 is suppliable through the power supply lines 71 and 72 to the controller 60, the fuel pump 80, the fuel injector 18, the spark plug 19, etc.

The controller 60 is further connected, between the main relay 9 and the inverter 61, to the power supply line 71. Therefore, even when the main relay 9 is interrupted, the controller 60 is able to receive the electric power generated by the rotating electrical machine 20. When supplied with electric power and operable, the controller 60 controls the opening and closing of the main relay 9.

The controller 60 includes a rotating electrical machine controller 62 and a combustion controller 63.

The combustion controller 63 of the controller 60 controls the engine 10. The rotating electrical machine controller 62 controls the rotating electrical machine 20. Specifically, the rotating electrical machine controller 62 controls the inverter 61. The rotating electrical machine controller 62 thereby controls drive operation and power generation operation of the rotating electrical machine 20.

The combustion controller 63 controls the combustion operation of the engine 10. By controlling the combustion operation of the engine 10, the combustion controller 63 controls the output of the engine 10. More specifically, the combustion controller 63 controls the spark plug 19 and the fuel injector 18.

The rotating electrical machine controller 62 controls the current flowing between the battery 4 and the rotating electrical machine 20 through the power supply line 71 by controlling the plurality of switching devices 611 to 616 included in the inverter 61. The rotating electrical machine controller 62 controls the respective on/off operations of the switching devices 611 to 616 to control the operation of the rotating electrical machine 20.

The controller 60 is arranged by a computer having a processor (CPU) 64 and a memory 65 (storage device). The memory 65 stores data related to programs and calculations. The CPU 64 performs calculation processing based on a control program and data stored in the memory 65. Functions of the rotating electrical machine controller 62 and the combustion controller 63 are realized by the CPU 64 executing the control program. Respective operations by the rotating electrical machine controller 62 and the combustion controller 63 are thus specifically, operations of the controller 60 having the form of the computer.

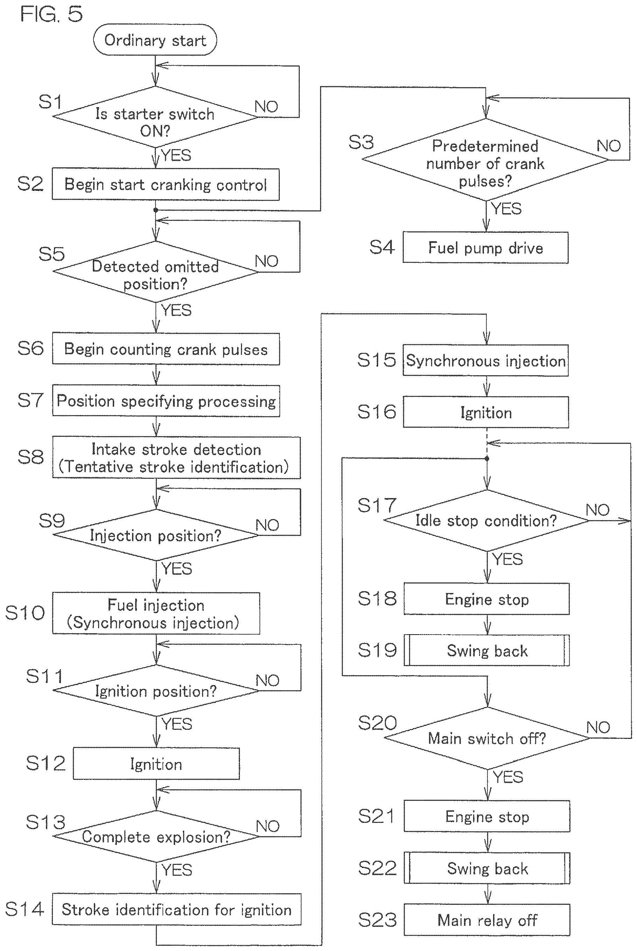

FIG. 5 is a flowchart for describing an example of processing by the controller 60 from the engine start to an engine stop. When use of the straddled vehicle 1 is to begin, the user turns on the main switch 7. Electric power is thereby supplied from the battery 4 to the controller 60 and the controller 60 begins processing. The controller 60 makes the main relay 9 conducting to connect the battery 4 and the inverter 61.

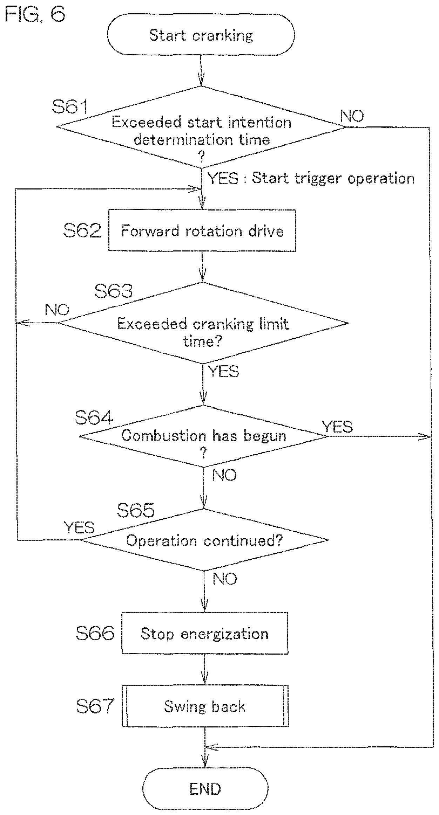

The user further operates the starter switch 70 to begin running of the engine 10 (step S1: YES). In response, the controller 60 starts the start cranking control (see FIG. 6) for driving the rotating electrical machine 20 in the forward rotation direction (step S2). That is, the controller 60 controls the switching devices 611 to 616 of the inverter 61 to make electric power be supplied from the battery 4 to the rotating electrical machine 20. Rotation of the crankshaft 15 is thereby begun.

When the rotation of the crankshaft 15 begins, the detection signals are generated from the electromagnetic pickup 50. The controller 60 performs waveform shaping of the detection signals to obtain crank pulses. The controller 60 performs on/off control of the switching devices 611 to 616 at a timing defined based on the crank pulses and thereby performs brushless drive control of the rotating electrical machine 20.

When a predetermined number (for example, two or three) of the crank pulses are generated (step S3: YES), the controller 60 begins drive of the fuel pump 80 (step S4) and prepares for start of the engine 10.

Meanwhile, the controller 60 monitors the crank pulses and judges whether or not the omitted position (the number "5" or "17") has arrived (step S5). When the omitted position arrives (step S5: YES), the controller 60 begins counting of the crank pulses (step S6). A position specifying processing of specifying the rotational position of the crankshaft 15 based on a count value of the crank pulses with the omitted position as a reference is then performed (step S7). Thereafter, the controller 60 constantly performs the counting of the crank pulses and the position specifying processing based on the count value.

Further, the controller 60 executes an engine control of controlling the running of the engine 10 based on the position of the crankshaft 15 specified by the position specifying processing. Specifically, the controller 60 monitors an engine speed based on intervals of the crank pulses and detects the intake stroke based on variation of the engine speed (step S8; tentative stroke identification based on intake stroke detection). Once the intake stroke is detected, stroke identification is enabled thereafter based on the rotational position of the crankshaft 15. That is, distinguishing among the positions "0" to "11" and among the positions "12" to "23" is enabled. The controller 60 waits for the rotational position of the crankshaft 15 to become an injection position (for example, the position "8") and, when the injection position is reached (step S9: YES), makes the fuel be injected from the fuel injector 18 (step S10). Further, the controller 60 waits for the rotational position of the crankshaft 15 to become an ignition position and, when an ignition position is reached (step S11: YES), makes the spark plug 19 perform spark discharge to ignite the gaseous mixture inside the combustion chamber 21 (step S12). Ignition positions are set to positions (for example, the positions "0" and "12") in the vicinity of a top dead center position. The ignition positions (for example, the positions "0" and "12") may be matched with the top dead center positions or may be positions shifted by minute angles from the top dead center positions.

Thereafter, the controller 60 monitors the engine speed based on the intervals of the crank pulses and, when the engine speed reaches a complete explosion engine speed (step S13: YES), performs stroke identification for ignition (step S14). The stroke identification for ignition includes, for example, a stroke identification based on variation of the engine speed in one combustion cycle. Before the stroke identification for ignition, spark discharge of the spark plug 19 is performed once in one rotation and ignition is performed twice in one combustion cycle. Specifically, two positions (for example, the positions "0" and "12") in a vicinity of the compression top dead center position and a vicinity of the exhaust top dead center position are deemed to be ignition positions and the spark plug 19 performs spark discharge at the two ignition positions. After the stroke identification for ignition, the spark plug 19 performs spark discharge once in one combustion cycle, that is, at the ignition position (for example, the position "0") in the vicinity of the compression top dead center position.

After completion of the stroke identification for ignition, the twenty four rotational positions "0" to "23," by which two rotations of the crankshaft 15 are divided into 30 degrees each, are identified accurately by the counting of the crank pulses, the fuel injection at the injection position (step S15; synchronous injection control) and the ignition at the ignition position (step S16) are repeated, and the combustion by the engine 10 is continued.

When the engine 10 is started, the controller 60 executes an idle stop control. That is, when an idle stop condition is satisfied by the straddled vehicle 1 stopping for traffic light waiting, etc. (step S17: YES), the controller 60 interrupts the fuel injection control and the ignition control and stops the combustion by the engine 10 (step S18). This state is an idle stop state.

The idle stop condition may be that all of the following conditions A1 to A4 continue for a predetermined duration (for example, three seconds).
A1: The throttle opening degree is a fully-closed opening degree.
A2: The vehicle speed is not more than a predetermined value (for example, 3 km/h).
A3: The engine speed is in an idling engine speed range (for example, not more than 2500 rpm).
A4: The engine temperature is not less than a predetermined value (for example, 60°C).

When the rotation of the crankshaft 15 stops, the controller 60 executes a swing back control (step S19).

If, instead of the idle stop, the user turns off the main switch 7 (step S20: YES), the controller 60 further interrupts the fuel injection control and the ignition control and stops the combustion by the engine 10 (step S21). In this case, even after the main switch 7 is turned off, the controller 60 keeps the main relay 9 in the on state to keep the connection with the battery 4 and performs control for stopping the engine 10 (step S21). Further, when the rotation of the crankshaft 15 stops, the controller 60 executes the swing back control (step S22). After this swing back control (step S22), the controller 60 turns off the main relay 9 (step S23) and interrupts the connection with the battery 4.

In stopping the engine 10, the controller 60 may perform a brake control to stop the rotation of the crankshaft 15 immediately. The brake control is a control of controlling the switching devices 611 to 616 of the inverter 61 to make the rotating electrical machine 20 generate a torque that is opposite the rotation direction of the crankshaft 15. After the rotation of the crankshaft 15 is stopped and before the swing back control (step S19 or S21) is performed, the controller 60 may energize the stator windings W for a fixed time to perform a stop position control. The stop position control is a control for accurately bringing the position of the crankshaft 15 to any position among the twelve rotational positions "0" to "11" (or "12" to "23").

FIG. 6 is a flowchart for describing an example of the start cranking control. When the starter switch 70 is operated, the controller 60 measures its operation duration. If the operation is performed such that the operation duration exceeds a start intention determination time (step S61: YES), the controller 60 energizes the rotating electrical machine 20 to perform a forward rotation drive for driving the crankshaft 15 in the forward rotation direction (step S62). That is, the controller 60 performs on/off control of the switching devices 611 to 616 of the inverter 61 in a forward rotation pattern. If the operation duration does not exceed the start intention determination time (step S61: NO), the controller 60 ends the start cranking control. That is, with the present preferred embodiment, a continuous operation of the starter switch 70 that exceeds the start intention determination time is an example of a start trigger operation. The starter switch 70 is an example of an operating member that is operated by the user to begin cranking.

The start intention determination time is set to a time of necessary and sufficient length to determine that the user has an intention of engine start. That is, the start intention determination time is set longer than a duration of an unintended operation as in a case where the user touches the starter switch 70 inadvertently. Also, the start intention determination time is set to a time not more than or shorter than a continuous operation time when the user operates the starter switch 70 intentionally with the intention to start. Also, the start intention determination time is set to a time not less than or longer than a continuous operation time when the user performs an unintended operation of the starter switch 70. The start intention determination time may, for example, be set to approximately 0.2 seconds.

After the forward rotation drive (step S62) is begun, the controller 60 measures a duration (cranking duration) after the forward rotation drive is started and judges whether or not the cranking duration has exceeded a predetermined cranking limit time (step S63). As long as the cranking duration does not exceed the cranking limit time (step S63: NO), the controller 60 continues the start cranking control and drives the rotating electrical machine 20 in the forward rotation direction (step S62).

When the cranking duration exceeds the cranking limit time (step S63: YES), the controller 60 judges whether or not the engine 10 has begun combustion (step S64). This judgment may be a determination of whether or not the engine speed has reached the complete explosion engine speed. If the engine 10 has begun combustion (step S64: YES), the controller 60 ends the start cranking control. In this case, the controller 60 may stop the energization of the rotating electrical machine 20 to end the forward rotation drive. Also, the controller 60 may continue the forward rotation drive of the rotating electrical machine 20 further instead to perform a start assist control for stabilizing a running state of the engine 10.

If, despite continuing the cranking until the cranking limit time, the combustion by the engine 10 has not begun (step S64: NO), the controller 60 judges whether or not the operation of the starter switch 70 is being continued (step S65). If the operation of the starter switch 70 is canceled (step S65: NO), the controller 60 stops the energization of the rotating electrical machine 20 even if the combustion by the engine 10 has not begun (step S66). Thereafter, the controller 60 performs the swing back control (step S67).

On the other hand, if the operation of the starter switch 70 is continued (step S65: YES), the controller 60 continues the start cranking control and drives the rotating electrical machine 20 in the forward rotation direction (step S62). If beginning of the combustion by the engine 10 is confirmed in the meantime (step S64: YES), the controller 60 stops the start cranking control. If the combustion by the engine 10 is not begun before the continuation of operation of the starter switch 70 is canceled (step S64: NO), then, if the operation of the starter switch 70 is canceled (step S65: NO), the energization of the rotating electrical machine 20 is stopped (step S66). Thereafter, the controller 60 performs the swing back control (step S67).

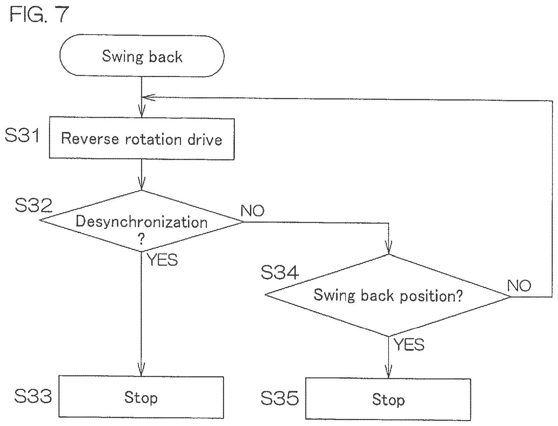

FIG. 7 is a flowchart for describing an example of the swing back control (steps S19, S22, and S67). The controller 60 drives the switching devices 611 to 616 of the inverter 61 in a reverse rotation pattern to drive the rotating electrical machine 20 in the reverse rotation direction (step S31). Thereby, the crankshaft 15 begins to rotate in the reverse rotation direction.

The controller 60 executes a reverse rotation identification of identifying the rotation of the crankshaft 15 in the reverse rotation direction. When the battery 4 is low in voltage, the rotation of the crankshaft 15 may not follow and may become desynchronized even if phase currents are applied to the stator windings W through the inverter 61. The controller 60 thus executes the reverse rotation identification. More specifically, the controller 60 determines whether or not desynchronization (loss of synchronism or out of step) is occurring (step S32). For example, if the electromagnetic pickup 50 does not generate the detection signal for not less than a predetermined time, that is, if a crank pulse is not generated for not less than the predetermined time, the controller 60 may judge that desynchronization is occurring. If desynchronization occurs (step S32: YES), the controller 60 stops the drive control of the rotating electrical machine 20 (step S33) and interrupts swing back.

If it is judged that desynchronization is not occurring (step S32: NO), that is, if it is judged that the crankshaft 15 is rotating, the controller 60 judges whether or not the position of the crankshaft 15 is a predetermined swing back position (for example, the position "7") (step S34). The position of the crankshaft 15 is obtained by the position specifying processing of counting the crank pulses (counting such that the count value is decreased when the rotation is in the reverse rotation direction). The rotating electrical machine 20 is driven to rotate in reverse until the position of the crankshaft 15 reaches the swing back position and when the swing back position is reached (step S34: YES), the drive of the rotating electrical machine 20 is stopped (step S35).

The swing back position is preferably set to be before (before in the reverse rotation direction) the immediately prior compression top dead center position. Preferably, after the crankshaft is rotated in reverse to the swing back position, the stop position control described above is performed. The stop position control enables the position of the crankshaft 15 to be brought accurately to any position among the twelve rotational positions "0" to "11" (or "12" to "23") and, in many cases, enables control to the swing back position.

The electromagnetic pickup 50 uses the electromagnetic induction that accompanies the movement of the detected portions 38 and therefore, immediately prior to rotation stop of the crankshaft 15, the detection signal may not be generated and there is a possibility of loss of accurate position information. The position of the crankshaft 15 recognized by the controller 60 at engine stop (step S18 or S21) and the position of the crankshaft 15 recognized by the controller 60 at swing back operation stop (step S35) may thus contain error. However, the swing back operation does not require so much accuracy and there is no problem even if the position of the crankshaft 15 after the swing back is slightly deviated from the swing back position (target position).

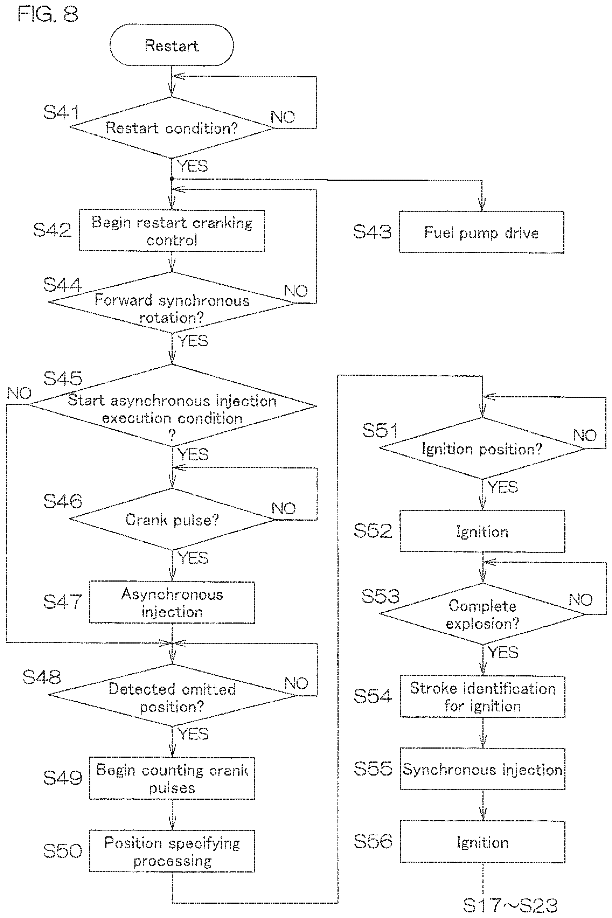

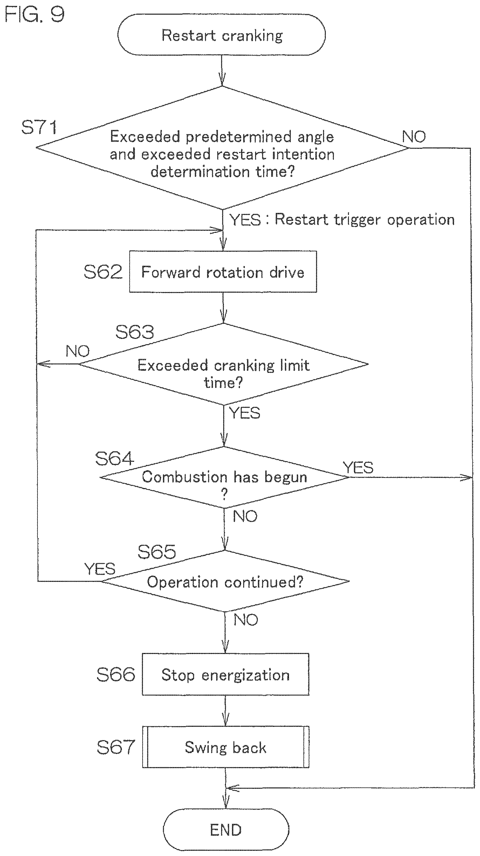

FIG. 8 is a flowchart for describing an example of processing by the controller 60 accompanying a restart from the idle stop state. In the idle stop state, the controller 60 executes a restart control. That is, if, in the idle stop state, a restart condition is satisfied (step S41: YES), the controller 60 begins a restart cranking control (see FIG. 9) for driving the rotating electrical machine 20 in the forward rotation direction (step S42). That is, the controller 60 controls the switching devices 611 to 616 of the inverter 61 in the forward rotation pattern to make electric power be supplied from the battery 4 to the rotating electrical machine 20. Rotation of the crankshaft 15 in the forward rotation direction is thereby begun.

When the rotation of the crankshaft 15 is begun, the detection signals are generated from the electromagnetic pickup 50. The controller 60 performs waveform shaping of the detection signals to obtain crank pulses. The controller 60 performs on/off control of the switching devices 611 to 616 in the forward rotation pattern at the timing defined based on the crank pulses and thereby drives the rotating electrical machine 20 in the forward rotation direction.

Also, when the restart condition is met (step S41: YES), the controller 60 begins drive of the fuel pump 80 (step S43) without waiting for the generation of crank pulses and prepares for early fuel injection. That is, when the restart condition is satisfied, the controller 60 begins drive of the fuel pump 80 without waiting for the beginning of rotation of the crankshaft 15.

The restart condition includes, for example, that the throttle opening degree, detected by the throttle position sensor 82, has become not less than a predetermined opening degree. In this case, the restart condition is that the user performs pivoting operation of not less than a predetermined angle of the accelerator operating member 8.

Even if the phase currents are applied to the stator windings W through the inverter 61, the rotation of the crankshaft 15 may not follow and may become desynchronized such that accurate rotation of the crankshaft 15 may be disabled. The controller 60 thus executes a forward rotation identification of identifying the beginning of rotation of the crankshaft 15 in the forward rotation direction. Specifically, the controller 60 executes a forward synchronous rotation determination for judging whether or not the crankshaft 15 is rotating in synchronization with the phase currents (step S44). For example, the controller 60 may judge that synchronous rotation in the forward rotation direction is not being performed when a timing of the detection signals of the electromagnetic pickup 50 is deviated from an appropriate timing with respect to the on/off timing of the switching devices 611 to 616 of the inverter 61. If synchronous rotation in the forward rotation direction is not detected, the controller 60 stops the drive control of the rotating electrical machine 20 and reattempts forward rotation drive of the rotating electrical machine 20 (step S42). Forward rotation drive (step S42) is thus repeated until the crankshaft 15 rotates synchronously in the forward rotation direction.

If the crankshaft 15 rotates synchronously in the forward rotation direction (step S44: YES), the controller 60 executes a start asynchronous injection control. Specifically, the controller 60 judges whether or not a start asynchronous injection execution condition is established (step S45). Asynchronous injection refers to the injection of the fuel by the fuel injector 18 before the tentative stroke identification is made based on detection of the omitted position or the intake stroke detection.

The start asynchronous injection execution condition includes, for example, one or more among a battery voltage condition, related to the voltage of the battery 4, an engine temperature condition, which is a condition related to the temperature of the engine 10, and an asynchronous injection frequency limit condition, which is a condition related to a limit of the number of times of the asynchronous injection.

The battery voltage condition may be that the battery voltage is not less than a threshold. When the battery voltage is low, there is concern of swing back control not being performed appropriately in the immediately prior engine stop and it is thus preferable to avoid asynchronous injection. Specifically, if the battery voltage is low, there is a possibility of not being able to rotate the crankshaft 15 in reverse appropriately to the swing back position. There is also a possibility that the stop position control is insufficient.

The engine temperature condition includes that the engine temperature is not less than a lower limit temperature. If the engine temperature is excessively low, the fuel injected by the asynchronous injection may not vaporize appropriately and combustion failure may occur. The engine temperature condition may include that the engine temperature is not more than an upper limit temperature. If the engine temperature is high, auto-ignition may occur before ignition in the compression stroke. The engine temperature is detected by the engine temperature sensor 83.

The asynchronous injection frequency limit condition is a condition that limits the number of times of asynchronous injection to an upper limit frequency (for example, once). There is a possibility of asynchronous injection being repeated if it takes time for the stroke identification. In this case, fuel may be supplied excessively and plug wetting may occur to the spark plug 19. It is therefore appropriate to restrict the asynchronous injection frequency.

If the start asynchronous injection execution condition is satisfied (step S45: YES), the controller 60 responds to an immediately subsequent input of a crank pulse (step S46: YES) and makes the fuel be asynchronously injected from the fuel injector 18 (step S47). The amount of fuel injected in this case is set in accordance with rules differing from those in the case of synchronous injection. For example, two types of maps, having the throttle opening degree as a variable, are prepared, one for synchronous injection and one for asynchronous injection. In synchronous injection, the fuel injection amount is determined in accordance with the synchronous injection map, and in asynchronous injection, the fuel injection amount is determined in accordance with the asynchronous injection map.

If the start asynchronous injection execution condition is not met (step S45: NO), the asynchronous injection (step S47) is omitted.

The controller 60 monitors the crank pulses and judges whether or not the omitted position has arrived (step S48). When the omitted position arrives, the controller 60 begins the counting of the crank pulses (step S49). The position specifying processing of specifying the rotational position of the crankshaft 15 based on the count value of the crank pulses with the omitted position as the reference is then performed (step S50). Thereafter, the controller 60 constantly performs the counting of the crank pulses and the position specifying processing based on the counting.

Further, the controller 60 performs an initial explosion ignition control. That is, when, by the position specifying processing (step S50), the arrival of the ignition position (initial explosion ignition position) is detected (step S51: YES), the controller 60 makes the spark plug 19 generate a spark discharge (step S52). If asynchronous injection (step S47) has been performed, the fuel is introduced into the combustion chamber 21 and therefore combustion occurs.

The swing back position is determined in advance and therefore accurate stroke identification is made possible when the first omitted position arrives. Therefore, in the case of restart from idle stop, the tentative stroke identification based on the intake stroke detection (see step S8 of FIG. 5) may be omitted.

Thereafter, the controller 60 monitors the engine speed based on the intervals of the crank pulses and, when the engine speed reaches the complete explosion engine speed (step S53: YES), performs the stroke identification for ignition (step S54). Before the stroke identification for ignition, spark discharge by the spark plug 19 is performed once in one rotation and ignition is performed twice in one combustion cycle.

After completion of the stroke identification for ignition, the twenty four rotational positions "0" to "23," by which two rotations of the crankshaft 15 are divided into 30 degrees each, are identified accurately by the counting of the crank pulses, the fuel injection at the injection position (step S55; synchronous injection control) and the ignition at the ignition position (step S56) are repeated, and the combustion by the engine 10 is continued.

Subsequent idle stop control or ordinary stop in response to an off operation of the main switch 7, etc., is the same as in the case of FIG. 5 (steps S17 to S23).

FIG. 9 is a flowchart for describing an example of the restart cranking control. In FIG. 9, the same processing steps as those in FIG. 6 (start cranking control) described above are provided with the same step numbers as in FIG. 6.

When the accelerator operating member 8 is operated in the idle stop state, the controller 60 measures its operation angle and its operation duration. Specifically, the controller 60 judges, based on the detection signal of the throttle position sensor 82, whether or not the accelerator operating member 8 has been operated beyond a predetermined angle. For example, in a case where the throttle valve TV is a butterfly valve, the predetermined angle may be set equal to an operation angle of the accelerator operating member 8 corresponding to a predetermined angular displacement (for example, of 1 degree) of the valve element. In actuality, the accelerator operating member 8 is provided with play and therefore the throttle position does not vary unless the accelerator operating member 8 is operated beyond the play range. The play range of the accelerator operating member 8 is thus also included in the predetermined angle. Therefore, when the accelerator operating member 8 is operated beyond the predetermined angle, it is possible to judge that the user has an intention of restart even if the operation duration is comparatively short.

When a state where the accelerator operating member 8 is operated beyond the predetermined angle exceeds a restart intention determination time (step S71: YES), the controller 60 energizes the rotating electrical machine 20 to perform the forward rotation drive for driving the crankshaft 15 in the forward rotation direction (step S62). That is, the controller 60 performs on/off control of the switching devices 611 to 616 of the inverter 61 in the forward rotation pattern. If the state where the operation angle of the accelerator operating member 8 exceeds the predetermined angle does not continue beyond the restart intention determination time (step S71: NO), the controller 60 ends the restart cranking control (step S71: NO). That is, with the present preferred embodiment, a continuous operation that is an operation of the accelerator operating member 8 exceeding the predetermined angle and exceeds the restart intention determination time is an example of a restart trigger operation.

The restart intention determination time is set to a time of necessary and sufficient length to determine that the user has an intention of engine restart. That is, the restart intention determination time is set longer than a duration of an unintended operation as in a case where the user touches the accelerator operating member 8 inadvertently. Also, the restart intention determination time is set to a time not more than or shorter than a continuous operation time when the user operates the accelerator operating member 8 intentionally with the intention to restart. The restart intention determination time may, for example, be set to approximately 10 milliseconds.

The processing by the controller 60 after the forward rotation drive is begun is the same as in the case of the start cranking control (steps S62 to S67).

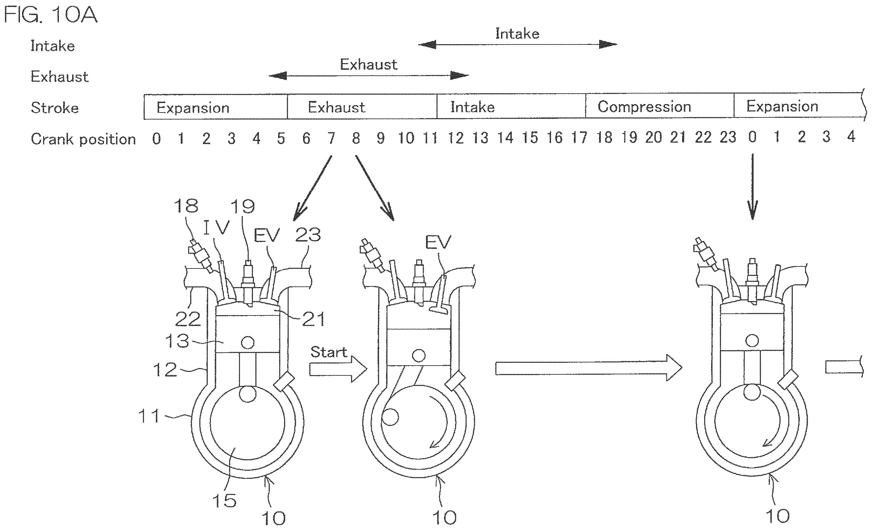

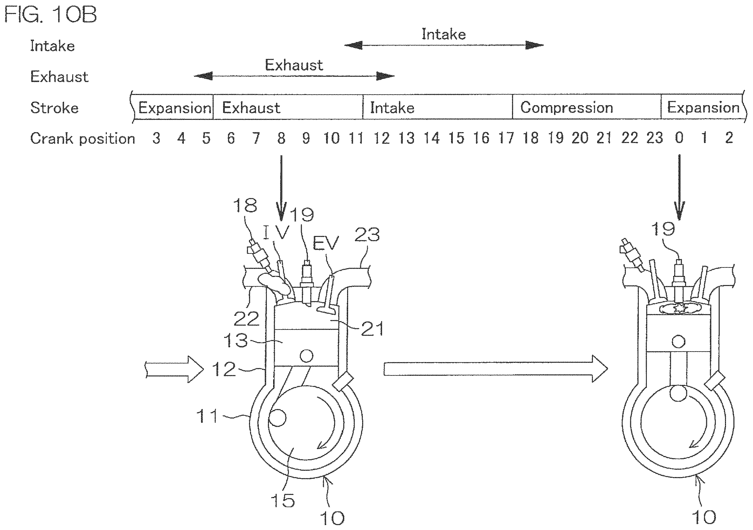

FIG. 10A and FIG. 10B are diagrams for describing an example of operations in an ordinary start. FIG. 10A and FIG. 10B illustrate an example of a series of operations and operations subsequent to the operations of FIG. 10A are shown in FIG. 10B.

The rotational position of the crankshaft 15 within a rotation section of one combustion cycle, that is, within a rotation section of 720 degrees (two rotations) is detected using the detection signals of the electromagnetic pickup 50 at the positions "0" to "23" that divide the rotation section equally into 24 parts. The positions "5" and "17" are the omitted positions (reference crank positions) and the position "0" is the ignition position set in the vicinity of the compression top dead center position. The position "12" is the position set in the vicinity of the exhaust top dead center. Before completion of the stroke identification (see step S14 of FIG. 5), ignition is performed at the position "12" in addition to the position "0."

In the present operation example, the exhaust valve EV is opened in a section of the positions "5" to "12" and the intake valve IV is opened in a section of the positions "11" to "18." For example, the position "8" is the injection position. The swing back position (target position) is a position before the ignition position "0" in the vicinity of the compression top dead center position when the crankshaft 15 is rotated in the reverse rotation direction and is, for example, the position "7." The swing back position is determined such that the compression top dead center would be the top dead center following the first omitted position (reference crank position) when the crankshaft 15 is rotated in the forward rotation direction from the swing back position. More specifically, the swing back position is preferably set between the injection position "8" and the immediately prior compression top dead center (vicinity of the position "0") and is more preferably a position closer to the injection position "8." Even more specifically, the swing back position is preferably the position "7" immediately prior to the injection position "8."

If the crankshaft 15 is at the position "7" (the swing back position), when the rotating electrical machine 20 is driven in the forward rotation direction, after the fuel injection position "8" arrives, the omitted position "17" arrives and the counting of the crank pulses begins from there. It is thus not possible to perform synchronous injection at the injection position "8" immediately after the swing back position "7." Therefore, at the ignition position "0" in the vicinity of the first compression top dead center position, the fuel is not present inside the combustion chamber 21 and combustion thus does not occur even if the spark plug 19 ignites.

When the first compression top dead center position is past and the tentative stroke identification based on the intake stroke detection ends, synchronous injection is performed at the next injection position "8." Therefore, when the spark plug 19 ignites at the ignition position "0" in the vicinity of the next compression top dead center position, combustion occurs, and the running of the engine 10 is begun.

The initial explosion thus occurs in the second combustion cycle from the swing back position "7."

In energizing the rotating electrical machine 20 to drive the crankshaft 15 in the forward rotation direction from the swing back position "7," the time required to the first ignition position "0" (compression top dead center position) is, for example, approximately 0.4 seconds. The time required for the crankshaft 15 to rotate from the ignition position "0" to the next ignition position "0" (compression top dead center position of a second time), at which the initial explosion occurs, is, for example, approximately 0.2 seconds.

The cranking limit time (step S63 of FIG. 6) is thus preferably set to not less than 0.6 seconds. That is, the cranking limit time is preferably set to not less than a sum of the time required from the swing back position to the first compression top dead center position and the time required for one immediately subsequent combustion cycle. In other words, it is preferably set to not less than the time required from the swing back position to the compression top dead center of the second time. To ensure the start, the cranking limit time should be set to a time (for example, of approximately 0.8 seconds) that is approximate to a sum of the time required from the swing back position to the first compression top dead center position and the time required for two immediately subsequent combustion cycles or to a time not less than such sum. In other words, the cranking limit time should be set to a time (for example, of approximately 0.8 seconds) approximate to the time required from the swing back position to the compression top dead center of a third time or to a time not less than such time. Securing of two opportunities for ignition is thereby enabled to enable a reliable engine start.

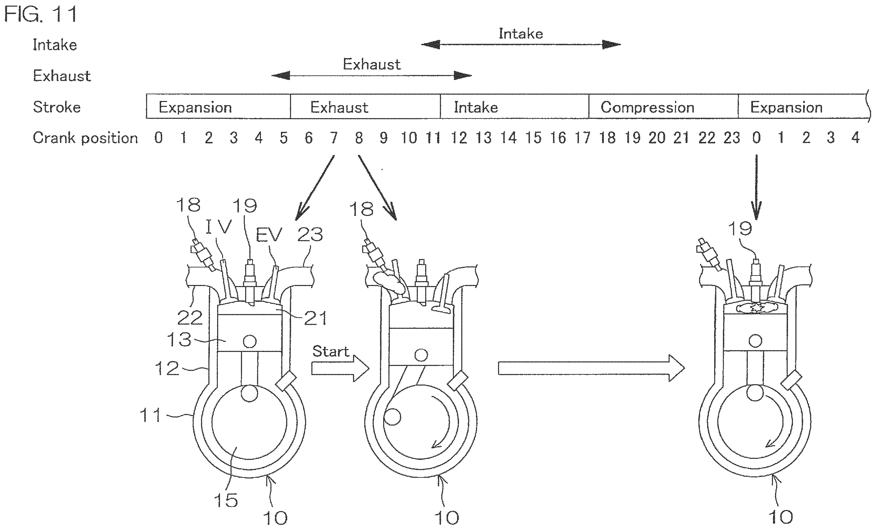

FIG. 11 is a diagram for describing an example of operations in the engine restart from the idle stop state. The time from the idle stop to the engine restart is generally not long and the rotational position of the crankshaft 15 thus does not change greatly while in the idle stop state. Therefore, in the restart, the crankshaft 15 is at or in a vicinity of the swing back position "7."

When, from this state, the rotating electrical machine 20 is driven in the forward rotation direction, the electromagnetic pickup 50 generates a detection signal and therefore a crank pulse is generated, at the latest, before the omitted position "17." Asynchronous injection is performed in response to the crank pulse. Thereafter, the omitted position "17" arrives and, from there, the counting of the crank pulses begins. Moreover, the swing back position in the restart is at or in a vicinity of the position "7" and therefore an assumption that the next omitted position is not the position "5" but is the position "17" holds. This thus enables the position "17" to be deemed to be the omitted position that is detected first and the stroke identification (specifying of the crank position) is enabled thereafter.

The controller 60 makes the spark plug 19 ignite at the ignition position "0" (initial explosion ignition position) in the vicinity of the first compression top dead center position. At this point, the fuel is already introduced into the combustion chamber by the asynchronous injection, thus enabling the initial explosion to be caused, and the running of the engine 10 begins.

Beginning of combustion from the first compression top dead center position is thus enabled and causing of the initial explosion within the first combustion cycle from the swing back position "7" is enabled. Immediate restart from the idle stop state is thereby enabled. The engine start is enabled one combustion cycle earlier in comparison to the ordinary start.

In most cases, when the rotating electrical machine 20 is driven in the forward rotation direction from the swing back position "7," the first crank pulse is generated at the position "8" (the injection position for synchronous injection) subsequent to the swing back position "7." Therefore, with the present preferred embodiment, performing of asynchronous injection is enabled at the same or substantially the same timing as synchronous injection.

When the rotating electrical machine 20 is energized to drive the crankshaft 15 in the forward rotation direction from the swing back position "7," the time required to the first ignition position "0" (compression top dead center position) is, for example, approximately 0.4 seconds. The initial explosion occurs at this point and it is therefore preferable to set the cranking limit time (step S63 of FIG. 9) in the restart cranking control to not less than approximately 0.4 seconds. That is, the cranking limit time is preferably set to not less than the time required from the swing back position to the first compression top dead center position. In other words, it is preferably set to not less than the time required from the swing back position to the compression top dead center position of a first time.

To ensure the start, the cranking limit time should be set to a time (for example, of approximately 0.6 seconds) that is approximate to a sum of the time required from the swing back position to the first compression top dead center and the time required for one immediately subsequent combustion cycle (of, for example, approximately 0.2 seconds) or to a time not less than such sum. In other words, the cranking limit time should be set to a time (for example, of approximately 0.6 seconds) approximate to the time required from the swing back position to the compression top dead center of the second time or to a time not less than such time. Securing of two opportunities for ignition is thereby enabled to enable a reliable engine start.

Cranking limit times of different lengths may be used or a cranking limit time of the same length may be applied in the ordinary start cranking control (see FIG. 6) and the restart cranking control (see FIG. 9). If the cranking limit time of the same length (for example, of approximately 0.8 seconds) is applied, the opportunities for ignition are increased, in the restart cranking from the idle stop state, to enable increased reliability of the engine start.

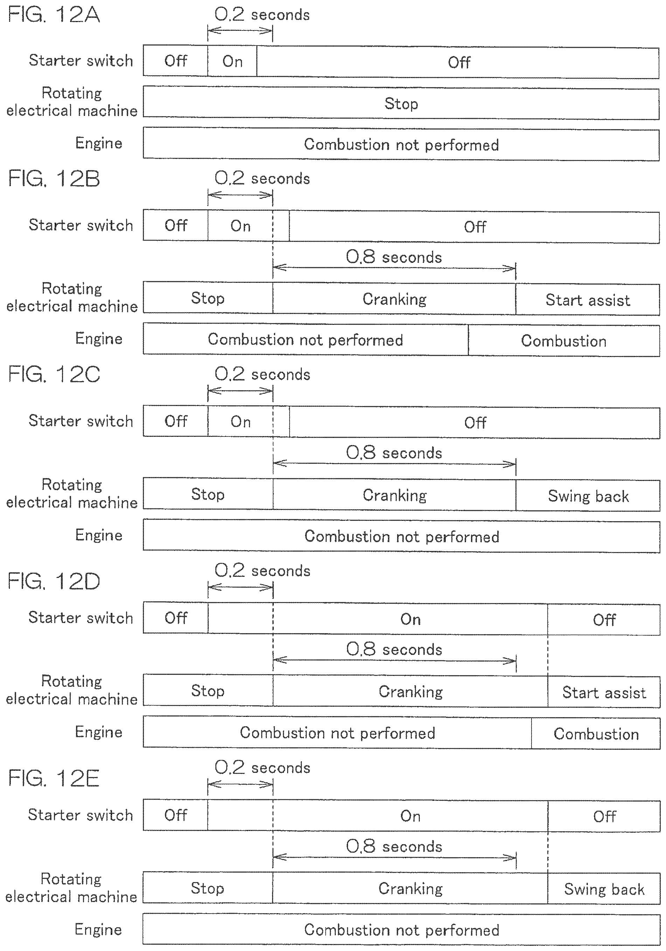

FIG. 12A to 12E show examples of cranking operations by the start cranking control. In these cranking operation examples, the start intention determination time is set to 0.2 seconds and the cranking limit time is set to 0.8 seconds.

As shown in FIG. 12A, when the operation duration of the starter switch 70 is less than 0.2 seconds, forward rotation drive (cranking) of the rotating electrical machine 20 is not performed. The combustion by the engine 10 is thus also not begun.

As shown in FIG. 12B, when the operation duration of the starter switch 70 exceeds 0.2 seconds, the cranking is executed. Even if the operation of the starter switch 70 is canceled during the cranking, the cranking is continued until 0.8 seconds (cranking limit time) elapses. If the combustion by the engine 10 begins before the elapse of 0.8 seconds, the start cranking control is ended after continuation of the cranking for 0.8 seconds. Thereafter, the energization of the rotating electrical machine 20 may be stopped or the forward rotation drive of the rotating electrical machine 20 may be continued subsequently until the combustion state of the engine 10 stabilizes (start assist control).

When, due to running out of fuel, etc., the start of the engine 10 is not enabled, the cranking is stopped when the cranking duration exceeds 0.8 seconds (cranking limit time) as shown in FIG. 12C. in this case, the swing back control is performed and the crankshaft 15 is rotated in reverse to the swing back position.

For example, in some cases where the engine start takes time due to an air temperature being a very low temperature, the user continuously operates the starter switch 70 over a long time. For example, there are cases where, as shown in FIG. 12D and FIG. 12E, the starter switch 70 still continues to be operated even when the cranking duration exceeds 0.8 seconds (cranking limit time). Even in such cases, the cranking is continued while the starter switch 70 is being operated. If the engine 10 begins combustion during that time, the start cranking control is ended as shown in FIG. 12D and the start assist control is performed as necessary. If the engine 10 does not begin combustion, then, when, as shown in FIG. 12E, the operation of the starter switch 70 is released, the cranking ends and thereafter the swing back control is performed.

Examples of cranking operations accompanying the restart cranking control are similar to the examples of the cranking operations of FIG. 12A to FIG. 12E. In the present preferred embodiment, the restart trigger operation of the restart cranking control is the continuation (for example, continuation exceeding 10 milliseconds) of the operation of the accelerator operating member 8 beyond the predetermined angle. Therefore, in each of the examples of the cranking operations of FIG. 12A to FIG. 12E, the operation of the starter switch 70 is replaced by the operation of the accelerator operating member 8 beyond the predetermined angle. Further, in each of the examples of the cranking operations of FIG. 12A to FIG. 12E, the start intention determination time (of, for example, 0.2 seconds) is replaced by the restart intention determination time (of, for example, 10 milliseconds). The examples of the cranking operations accompanying the restart cranking control are thereby obtained.

As described above, with the present preferred embodiment, after the running of the engine 10 is stopped, the controller 60 executes the swing back control to rotate the crankshaft 15 in reverse to the swing back position. Securing of a run-up section, in which the crankshaft 15 is accelerated up to the compression top dead center position, in the subsequent engine start is thus enabled. Passing of the compression top dead center is thereby enabled using an inertia torque of a rotating system, including the crankshaft 15, in addition to a driving torque, generated by the rotating electrical machine 20. The rotating electrical machine 20 is thus not required to generate a large drive torque and is enabled to be made compact accordingly. In other words, performing of the engine start without hindrance is enabled while using the rotating electrical machine 20, having an electric power generating function, in common as a starter for the engine start.

With the present preferred embodiment, when the user operates the starter switch 70 to perform the start trigger operation, the cranking is begun in response to the start trigger operation. Then, even if the start trigger operation is eliminated thereafter, the energization of the rotating electrical machine 20 is continued until the elapse of the cranking limit time, determined such that the engine 10 begins the combustion (see FIG. 12B). The engine 10 is thereby enabled to begin the combustion reliably when the start trigger operation is performed. That is, even when the start trigger operation ends in a short time, the cranking is continued, thus enabling the combustion by the engine 10 to begin reliably.

If, when the start trigger operation ends in a short time, the energization of the rotating electrical machine 20 is stopped without the combustion by the engine 10 beginning, the swing back operation would be performed before the engine 10 is started subsequently. A waiting time until the next start thus becomes long. The user is thus compelled to perform the start trigger operation a plurality of times and the waiting time for the swing back operation occurs between the plurality of times of the start trigger operation. Also, even if the combustion by the engine 10 begins, if the energization of the rotating electrical machine 20 is stopped immediately after the beginning of combustion, the combustion becomes unstable and a so-called low idling phenomenon may occur.

On the other hand, with the present preferred embodiment, even if the start trigger operation ends in a short time, the rotating electrical machine 20 continues to drive the crankshaft 15 in the forward rotation direction during the cranking limit time (see FIG. 12B). This enables the combustion by the engine 10 to begin reliably with a single start trigger operation and therefore there is no need to perform the start trigger operation a plurality of times and the waiting time in between also does not occur. Moreover, the cranking is continued until the cranking limit time elapses, thus enabling avoiding of unstable combustion by the engine and avoiding of the occurrence of the so-called low-idling phenomenon.

Reduction of starting inconvenience due to the swing back operation is thus enabled and the providing of the engine unit EU of satisfactory startability is enabled.

Also, with the present preferred embodiment, whereas the energization of the rotating electrical machine 20 is continued even if the start trigger operation is eliminated, the energization of the rotating electrical machine 20 is ended when the cranking limit time elapses without the combustion by the engine 10 beginning (see FIG. 12C). This enables energization time of the rotating electrical machine 20 to be limited to the cranking limit time when the start trigger operation is eliminated. Limiting of energy consumption is thereby enabled.

Also, with the present preferred embodiment, as long as the start trigger operation is continued, the energization of the rotating electrical machine 20 is continued even after the elapse of the cranking limit time (see FIG. 12D and FIG. 12E). Cranking for a long time in accordance with an intention of the user is thereby enabled. For example, when the air temperature is low, cranking for a long time may be required until the combustion by the engine begins. Allowing of cranking for a long time in accordance with the intention of the user is enabled in such cases.

Also, with the present preferred embodiment, when the continuous operation time of the starter switch 70 exceeds the start intention determination time (of, for example, 0.2 seconds), the cranking is performed. If the continuous operation time of the starter switch 70 does not reach the start intention determination time, the operation is not deemed to be the start trigger operation (see FIG. 12A). Therefore, even if the user operates the starter switch 70 inadvertently, cranking is not begun. This enables the cranking to be performed in accurate reflection of the user's intention.

With the present preferred embodiment, the cranking is performed until elapse of the cranking limit time, determined such that the combustion by the engine 10 begins and therefore, if the cranking is performed when the user operates the starter switch 70 inadvertently, cranking and engine start that are not desired by the user may be performed. Thus, by starting the cranking on condition of the continuous operation time of the starter switch 70 exceeding the start intention determination time, avoiding of the undesired cranking and engine start is enabled. This enables unnecessary energy consumption to be avoided.

Also, with the present preferred embodiment, when the engine 10 is stopped by the idle stop control, the swing back control is performed before the crankshaft 15 is driven in the forward rotation direction by the rotating electrical machine 20 subsequently. When the user then performs the restart trigger operation on the accelerator operating member 8 in the idle stop state, the cranking is performed. Even if the user interrupts the restart trigger operation before the beginning of the combustion by the engine 10, the cranking is continued until the cranking limit time elapses. This enables the engine restart from the idle stop to be performed reliably.

If the cranking is stopped when the restart trigger operation is interrupted before the beginning of the combustion by the engine 10, the swing back operation is performed before the engine 10 is restarted subsequently. A waiting time until the next restart thus becomes long. The user is thus compelled to perform the restart trigger operation a plurality of times and the waiting time for the swing back occurs between the plurality of times of the restart trigger operation.

On the other hand, with the present preferred embodiment, even if the restart trigger operation ends in a short time, the cranking is continued until elapse of the cranking limit time, determined such that the engine 10 begins the combustion. This enables the engine to be restarted reliably with a single restart trigger operation. There is thus no need to perform the restart trigger operation a plurality of times and the waiting time in between also does not occur. Avoiding of inconvenience and delay of restart due to the swing back operation is thus enabled.

Also, with the present preferred embodiment, the swing back operation is performed when the start of the engine 10 fails, and therefore beginning of rotation of the crankshaft 15 from the swing back position is enabled in the subsequent start. Start of the engine 10 using the inertia torque of the rotating system, including the crankshaft 15, is thereby enabled.

Also, with the present preferred embodiment, rotation information of the rotor 30 of the rotating electrical machine 20, that is, the position information of the crankshaft 15 is acquired using the electromagnetic pickup 50, and therefore the arrangement is inexpensive in comparison to a case of using a position sensor, such as a Hall IC. On the other hand, the position specifying based on the detection signals of the electromagnetic pickup 50 takes time. In particular, the time it takes for the position specifying of the crankshaft 15 to be enabled from a state where the engine 10 is stopped is long in comparison to a case of using a position sensor, such as a Hall IC. Accordingly, the time it takes for the control of the running of the engine 10 to be enabled from the beginning of rotation of the crankshaft 15 is long.

If, when the start trigger operation ends in a short time, the energization of the rotating electrical machine 20 is stopped without the combustion by the engine 10 beginning, the swing back operation would be performed before the engine 10 is started subsequently. In addition, there is also a waiting time for the combustion control of the engine 10 to be started following the position specifying based on the detection signals of the electromagnetic pickup 50. The user is thus compelled to perform the start trigger operation a plurality of times and the waiting time for the swing back operation and the position specifying occurs between the plurality of times of the start trigger operation.

On the other hand, with the present preferred embodiment, even if the start trigger operation ends in a short time, the cranking is continued until the cranking limit time elapses. This enables the combustion by the engine 10 to begin reliably with a single start trigger operation and therefore there is no need to perform the start trigger operation a plurality of times and a long waiting time such as mentioned above also does not occur. Reduction of starting inconvenience due to the swing back operation is thus enabled despite being an inexpensive arrangement that uses the electromagnetic pickup 50.

With the present preferred embodiment, the engine 10 is a single-cylinder, four-stroke engine. Therefore, variation of a load torque during cranking is large and the load torque becomes highest in a vicinity of the compression top dead center position. Thus, by performing the swing back operation, performing of cranking past the compression top dead center is enabled even with the low-power rotating electrical machine 20.

On the other hand, the four-stroke engine 10 has the intake stroke, the compression stroke, the expansion stroke, and the exhaust stroke in one combustion cycle. By identification of the strokes, appropriate control of the running of the engine 10 is enabled. Meanwhile, the time for the stroke identification is long because the position specifying using the detection signals of the electromagnetic pickup 50 takes time. Accordingly, the start of the engine 10 takes time.

With the present preferred embodiment, once the cranking is started in response to the start trigger operation, even if the start trigger operation is eliminated, the cranking is continued until the cranking limit time elapses. The start of the engine 10 reliably with a single start trigger operation is thus enabled. This enables repetition of cranking to be avoided as much as possible and therefore enables reduction of starting inconvenience due to the use of the electromagnetic pickup 50.

Also, with the present preferred embodiment, the position specifying of the crankshaft 15 is enabled after the omitted position arrives in the detection region of the electromagnetic pickup 50 and the reference detection signal is generated. It thus takes time for the stroke identification to be enabled. With the present preferred embodiment, once the cranking is started, even if the start trigger operation is eliminated, the cranking is continued until the cranking limit time elapses, therefore enabling repetition of the start operation to be avoided. This thus enables a waiting time due to the repetition of the start operation to be avoided as well. By the above, even if it takes time for the stroke identification to be enabled, the user is made to wait for that time just once and therefore there is no practical inconvenience.

Also, with the present preferred embodiment, the swing back operation is enabled to be performed accurately using the position specifying processing using the electromagnetic pickup 50. This enables the crankshaft 15 to begin rotating and accelerating reliably from the swing back position in starting the engine 10 and therefore enables the engine 10 to be started reliably. This enables repetition of the start to be avoided.

Although the preferred embodiment has been described above, the present teaching may be implemented in yet other modes.

For example, with the preferred embodiment described above, the swing back control is performed in accompaniment with the stop of running of the engine 10. However, the swing back control suffices to be performed between when the engine 10 enters the idle stop state and when the driving of the crankshaft 15 in the forward rotation direction for the restart is begun. For example, instead of performing the swing back control upon idle stop, the swing back control may be performed when the restart condition is satisfied and the crankshaft 15 may thereafter be rotated in the forward rotation direction by the rotating electrical machine 20.

Also, the restart trigger operation in the preferred embodiment described above is the operation of the accelerator operating member 8 by not less than the predetermined angle and of continuing this in excess of the restart intention determination time. However, the restart trigger operation may include that the starter switch 70 is operated beyond the restart intention determination time. In this case, when the starter switch 70 is operated for not less than the restart intention determination time when in the idle stop state, the control for restarting the engine 10 is begun. The restart intention determination time in this case may be the same as or shorter than the start intention determination time that is applied to the operation of the starter switch 70 when not in the idle stop state. If the starter switch 70 is operated when not in the idle stop state, the start cranking control (see FIG. 6) is performed. If the starter switch 70 is operated when in the idle stop state, the restart cranking control (see FIG. 9) is performed.

Although with the preferred embodiment described above, the forward rotation identification of identifying that the crankshaft 15 has begun to rotate in the forward rotation direction is performed, this may be omitted. That is, the asynchronous injection may be performed on condition that the rotating electrical machine 20 has begun the forward rotation drive. For example, the asynchronous injection may be allowed after the rotating electrical machine 20 begins the forward rotation drive and waiting for just a fixed time is performed, and the asynchronous injection may then be executed in synchronization with an immediately subsequent crank pulse.

Further, although with the preferred embodiment described above, the asynchronous injection is not performed in the ordinary start, the same asynchronous injection as in the restart may be performed in the ordinary start.

Further, with the preferred embodiment described above, the reference detection signal is generated when the omitted position on the rotor 30 passes the electromagnetic pickup 50. However, the location of the detected portion for generating the reference detection signal is not restricted thereto. For example, one reference detection portion, differing in length in the peripheral direction of the rotor 30 from the other detected portions, may be provided.

To obtain the rotation information of the rotor 30, a rotation angle sensor, such as a Hall IC, etc., may be used in place of the electromagnetic pickup 50.

Although with the preferred embodiment described above, it is judged whether or not an operation time or the cranking duration exceeds a corresponding determination reference value (step S61, S63, S71, etc.), it may instead be judged whether or not each time has arrived at the corresponding determination reference value. There is no practical difference between either type of judgment.

Although with the preferred embodiment described above, the single-cylinder, four-stroke engine was taken up as an example, the present teaching may also be applied to a four-stroke engine having multiple cylinders.

Further, although with the preferred embodiment described above, the straddled vehicle having the two wheels 3a and 3b at the front and rear was taken up as an example, the present teaching may also be applied to straddled vehicles of other forms, such as a straddled vehicle having thee wheels, etc.

## Claims

1. A method for controlling an engine unit (EU) for a straddled vehicle (1), the engine unit (EU) comprises an engine (10) having a crankshaft (15) and a rotating electrical machine (20) power-transmittably coupled to the crankshaft (15), configured to be used in common as a starter motor for rotating the crankshaft (15), and as a generator for generating electric power by a rotating force of the crankshaft (15); the method comprises:
executing, in response to a start trigger operation of an operating member (70, 8), when the engine (10) is in a stopped state, a start cranking control (S61 to 65, S71) of energizing the rotating electrical machine (20) to drive the crankshaft (15) in a forward rotation direction so as to start the engine (10),
executing, after the engine (10) is stopped and before beginning the drive of the crankshaft (15) in the forward rotation direction, a swing back control (S19, S22, S67, S31 to S35) of driving the crankshaft (15) in a reverse rotation direction by the rotating electrical machine (20) to rotate the crankshaft (15) in reverse, wherein the swing back control is performed between a point at which the engine (10) is put in the stopped state and a point at which the engine (10) is started subsequently by performing the start trigger operation by the operating member (70, 8), and
**characterized in that** the method further comprises:
in the start cranking control (S61 to S67, S71), continuing the energization of the rotating electrical machine (20) until a predetermined cranking limit time, determined such that the engine (10) begins combustion, elapses, even if the start trigger operation of the operating member (70, 8) is eliminated, wherein, if, in the start cranking control (S61 to S67, S71),
the start trigger operation of the operating member (70, 8) is continued until after the predetermined cranking limit time elapses without the engine (10) beginning the combustion, continuing the energization of the rotating electrical machine (20) until the start trigger operation is eliminated.

2. The method according to claim 1, wherein, in the start cranking control (S61 to S67, S71), in response to the start trigger operation of the operating member (70, 8) when the engine (10) is in the stopped state, energizing the rotating electrical machine (20) to drive the crankshaft (15) in the forward rotation direction to start the engine (10) and, even if the start trigger operation of the operating member (70,8) is eliminated, continuing the energization of the rotating electrical machine (20) until the predetermined cranking limit time elapses, and stopping the energization of the rotating electrical machine (20) when the predetermined cranking limit time elapses without the engine (10) beginning the combustion.

3. The method according to claim 1 or 2, wherein the operating member includes a starter switch (70) configured to be operated by an operator to start the engine (10) and the start trigger operation is a continuous operation of the starter switch (70) that reaches a predetermined time or exceeds the predetermined time.

4. The method according to any one of claims 1 to 3, further comprising executing an idle stop control (S17 to S18) of stopping the combustion by the engine (10) to enter an idle stop state when an idle stop condition is established,
the operating member includes a throttle operating member (8) that is configured to be operated by the operator to operate a throttle of the engine (10), the start trigger operation includes a predetermined restart trigger operation of the throttle operating member (8) by the operator, and
the start cranking control (S61 to S67, S71) includes a restart cranking control (S62 to S67, S71) of responding to the restart trigger operation of the throttle operating member (8) in the idle stop state.

5. The method according to any one of claims 1 to 4, further comprising executing the swing back control (S19, S22, S67, S31 to S35) when start of the engine (10) by the start cranking control (S61 to S67, S71) fails.

6. The method according to any one of claims 1 to 5, wherein the rotating electrical machine (20) further comprises a rotor (30) that is configured to rotate together with the rotation of the crankshaft (15); a plurality of detected portions (38) located on the rotor (30) at intervals in a rotation direction; and an electromagnetic pickup (50), having a detection region in a region through which the plurality of detected portions (38) pass, for generating detection signals in accompaniment with passage of the detected portions (38) through the detection region;
wherein the method further comprises:
executing a position specifying processing (S7) of specifying a position of the crankshaft (15) using the detection signals generated by the electromagnetic pickup (50) and an engine control (S8 to S16) of controlling running of the engine (10) using the position specified by the position specifying processing (S7).

7. The method according to claim 6, wherein the engine is a single-cylinder, four-stroke engine (10), and
in the engine control (S8 to S16), controlling the running of the engine (10) based on stroke identification using the position specifying processing (S7).

8. The method according to claim 7, wherein the plurality of detected portions (38) are arranged such that the electromagnetic pickup (50) generates a reference detection signal at a predetermined reference crank position, and
in the position specifying processing (S7), specifying the position of the crankshaft (15) based on the reference detection signal generated by the electromagnetic pickup (50) after the crankshaft (15) begins to rotate in the forward rotation direction.

9. The method according to any one of claims 6 to 8, wherein, in the swing back control (S19, S22, S67, S31 to S35), making the crankshaft (15) rotate in reverse to a predetermined swing back position based on the position specified by the position specifying processing (S7).

10. An engine unit (EU) for a straddled vehicle (1), the engine unit (EU) comprising:
an engine (10) having a cylinder (12) and a crankshaft (15);
a rotating electrical machine (20) power-transmittably coupled to the crankshaft (15),
configured to be used in common as a starter motor for rotating the crankshaft (15), and
as a generator for generating electric power by a rotating force of the crankshaft (15); and
a controller (60) configured to control the engine (10) and the rotating electrical machine (20) and configured to execute a method for controlling an engine unit (EU) for a straddled vehicle (1) according to any one of claims 1 to 9.

11. A straddled vehicle (1) comprising:
the engine unit (EU) according to claim 10;
a wheel (3b) to which the rotation of the crankshaft (15) is transmitted; and
a straddled seat (5), wherein
the operating member (70, 8) is included in the straddled vehicle (1).

## Patentansprüche

1. Ein Verfahren zum Steuern einer Motoreinheit (EU) für ein Spreiz-Sitz-Fahrzeug (1), die Motoreinheit (EU) umfasst einen Motor (10) mit einer Kurbelwelle (15) und eine drehende elektrische Maschine (20), die kraftübertragend mit der Kurbelwelle (15) gekoppelt ist, konfiguriert, um gemeinsam als Startmotor zum Drehen der Kurbelwelle (15) und als Generator zum Erzeugen von elektrischer Energie durch eine Drehkraft der Kurbelwelle (15) verwendet zu werden; das Verfahren umfasst:
Ausführen, als Reaktion auf einen Startauslösevorgang eines Betätigungselements (70, 8), wenn sich der Motor (10) in einem gestoppten Zustand befindet, einer Startkurbelsteuerung (S61 bis 65, S71) zum Erregen der rotierenden elektrischen Maschine (20), um die Kurbelwelle (15) in einer Vorwärtsdrehrichtung anzutreiben, um so den Motor (10) zu starten,
Ausführen, nachdem der Motor (10) gestoppt ist und bevor der Antrieb der Kurbelwelle (15) in der Vorwärtsdrehrichtung beginnt, einer Rückschwenksteuerung (S19, S22, S67, S31 bis S35) des Antriebs der Kurbelwelle (15) in einer Rückwärtsdrehrichtung durch die rotierende elektrische Maschine (20), um die Kurbelwelle (15) rückwärts zu drehen, wobei die Rückschwenksteuerung zwischen einem Punkt, an dem der Motor (10) in den gestoppten Zustand versetzt wird, und einem Punkt, an dem der Motor (10) anschließend durch Ausführen des Startauslösevorgangs durch das Betätigungselement (70, 8) gestartet wird, durchgeführt wird, und **dadurch gekennzeichnet, dass** das Verfahren weiterhin umfasst:
in der Startkurbelsteuerung (S61 bis S67, S71), fortsetzen der Erregung der rotierenden elektrischen Maschine (20) bis eine vorbestimmten Anlassgrenzzeit, die so bestimmt ist, dass der Motor (10) die Verbrennung beginnt, abläuft, auch wenn der Startauslösevorgang des Betätigungsglieds (70, 8) aufgehoben wird, wobei, wenn, in der Startkurbelsteuerung (S61 bis S67, S71) der Startauslösevorgang des Betätigungselements (70, 8) bis nach Ablauf der vorbestimmten Anlassgrenzzeit fortgesetzt wird, ohne dass der Motor (10) die Verbrennung beginnt, fortsetzen der Erregung der rotierenden elektrischen Maschine (20) bis der Startauslösevorgang aufgehoben ist.

2. Das Verfahren gemäß Anspruch 1, wobei in der Startkurbelsteuerung (S61 bis S67, S71) als Reaktion auf den Startauslösevorgang des Betätigungselements (70, 8), wenn sich der Motor (10) im gestoppten Zustand befindet, Erregen der rotierenden elektrischen Maschine (20), um die Kurbelwelle (15) in der Vorwärtsdrehrichtung anzutreiben, um den Motor (10) zu starten, und, selbst wenn der Startauslösevorgang des Betätigungselements (70, 8) aufgehoben ist, Fortsetzen der Erregung der rotierenden elektrischen Maschine (20), bis die vorbestimmte Anlassgrenzzeit abläuft, und Stoppen der Erregung der rotierenden elektrischen Maschine (20), wenn die vorbestimmte Anlassgrenzzeit abläuft, ohne dass der Motor (10) die Verbrennung beginnt.

3. Das Verfahren gemäß Anspruch 1 oder 2, wobei das Betätigungselement einen Starterschalter (70) enthält, der konfiguriert ist, um von einem Bediener betätigt zu werden, um den Motor (10) zu starten, und der Startauslösevorgang ein kontinuierlicher Betrieb des Starterschalters (70) ist, der eine vorbestimmte Zeit erreicht oder die vorbestimmte Zeit überschreitet.

4. Das Verfahren gemäß irgendeinem der Ansprüche 1 bis 3, das weiterhin die Ausführung einer Leerlaufstoppsteuerung (S17 bis S18) zum Anhalten der Verbrennung durch den Motor (10) umfasst, um in einen Leerlaufstoppzustand einzutreten, wenn ein Leerlaufstoppzustand hergestellt ist, umfasst,
das Betätigungselement enthält ein Drosselbetätigungselement (8), das konfiguriert ist, um von dem Bediener betätigt zu werden, um eine Drosselklappe des Motors (10) zu betätigen, der Startauslösevorgang enthält einen vorbestimmten Neustartauslösevorgang des Drosselbetätigungselements (8) durch den Bediener, und
die Startkurbelsteuerung (S61 bis S67, S71) enthält eine Neustartkurbelsteuerung (S62 bis S67, S71), die auf den Neustartauslösevorgang des Drosselbetätigungselements (8) im Leerlaufstoppzustand reagiert.

5. Das Verfahren gemäß irgendeinem der Ansprüche 1 bis 4, das weiterhin die Ausführung der Rückschwenksteuerung (S19, S22, S67, S31 bis S35) umfasst, wenn der Start des Motors (10) durch die Startkurbelsteuerung (S61 bis S67, S71) fehlschlägt.

6. Das Verfahren gemäß irgendeinem der Ansprüche 1 bis 5, wobei die rotierende elektrische Maschine (20) weiterhin einen Rotor (30), der konfiguriert ist, um sich zusammen mit der Drehung der Kurbelwelle (15) zu drehen; eine Mehrzahl von erfassten Abschnitten (38), die auf dem Rotor (30) in Intervallen in einer Drehrichtung angeordnet sind; und einen elektromagnetischen Aufnehmer (50), der einen Erfassungsbereich in einem Bereich hat, durch den die Mehrzahl von erfassten Abschnitten (38) hindurchgeht, zum Erzeugen von Erfassungssignalen in Begleitung mit dem Durchgang der erfassten Abschnitte (38) durch den Erfassungsbereich, aufweist;
wobei das Verfahren weiterhin umfasst:
Ausführen einer Positionsbestimmungsverarbeitung (S7) zum Bestimmen einer Position der Kurbelwelle (15) unter Verwendung der Erfassungssignale, die von dem elektromagnetischen Aufnehmer (50) erzeugt sind, und einer Motorsteuerung (S8 bis S16) zum Steuern des Betriebs des Motors (10) unter Verwendung der Position, die durch die Positionsbestimmungsverarbeitung (S7) bestimmt ist.

7. Das Verfahren gemäß Anspruch 6, wobei der Motor ein Einzylinder-Viertaktmotor (10) ist, und
in der Motorsteuerung (S8 bis S16), Steuern des Betriebs des Motors (10) auf der Grundlage der Hubidentifizierung unter Verwendung der Positionsbestimmungsverarbeitung (S7).

8. Das Verfahren gemäß Anspruch 7, wobei die Mehrzahl der erfassten Abschnitte (38) angeordnet sind, so dass der elektromagnetische Aufnehmer (50) ein Referenz-Erfassungssignal an einer vorbestimmten Referenz-Kurbelposition erzeugt, und
in der Positionsbestimmungsverarbeitung (S7), Bestimmen der Position der Kurbelwelle (15) basierend auf dem Referenz-Erfassungssignal, das von dem elektromagnetischen Aufnehmer (50) erzeugt wird, nachdem die Kurbelwelle (15) beginnt, sich in der Vorwärtsdrehrichtung zu drehen.

9. Verfahren gemäß irgendeinem der Ansprüche 6 bis 8, wobei bei der Rückschwenksteuerung (S19, S22, S67, S31 bis S35) die Kurbelwelle (15) auf der Grundlage der Position, die durch die Positionsbestimmungsverarbeitung (S7) bestimmt ist, rückwärts in eine vorbestimmte Rückschwenkposition gedreht wird.

10. Eine Motoreinheit (EU) für ein Spreiz-Sitz-Fahrzeug (1), die Motoreinheit (EU) umfasst:
einen Motor (10) mit einem Zylinder (12) und einer Kurbelwelle (15);
eine drehende elektrische Maschine (20), die kraftübertragend mit der Kurbelwelle (15) gekoppelt ist und konfiguriert ist, um gemeinsam als Startermotor zum Drehen der Kurbelwelle (15) und als Generator zur Erzeugung von elektrischer Energie durch eine Drehkraft der Kurbelwelle (15) verwendet zu werden; und
ein Steuergerät (60), das konfiguriert ist, um den Motor (10) und die rotierende elektrische Maschine (20) zu steuern, und das konfiguriert ist, um ein Verfahren zum Steuern einer Motoreinheit (EU) für ein Spreiz-Sitz-Fahrzeug (1) gemäß irgendeinem der Ansprüche 1 bis 9 auszuführen.

11. Ein Spreiz-Sitz-Fahrzeug (1), das umfasst:
die Motoreinheit (EU) gemäß Anspruch 10;
ein Rad (3b), auf das die Drehung der Kurbelwelle (15) übertragen wird; und
einem Spreiz-Sitz (5), wobei
das Betätigungselement (70, 8) in dem Spreiz-Sitz-Fahrzeug (1) enthalten ist.

## Revendications

1. Procédé de commande d'une unité de moteur (UE) pour un véhicule à enfourcher (1), l'unité de moteur (UE) comprend un moteur (10) ayant un vilebrequin (15) et une machine électrique tournante (20) couplée en puissance au vilebrequin (15), configurée pour être utilisée en commun comme un moteur de démarrage pour faire tourner le vilebrequin (15), et comme un générateur pour produire de l'énergie électrique par une force de rotation du vilebrequin (15) ;
le procédé comprend les opérations suivantes :
exécuter, en réponse à une opération de déclenchement de démarrage d'un organe de commande (70, 8), lorsque le moteur (10) est à l'arrêt, d'une commande de démarrage du vilebrequin (S61 à 65, S71) consistant à alimenter la machine électrique tournante (20) pour entraîner le vilebrequin (15) dans un sens de rotation vers l'avant de manière à démarrer le moteur (10),
exécuter, après l'arrêt du moteur (10) et avant de commencer l'entraînement du vilebrequin (15) dans le sens de rotation avant, une commande de retour en arrière (S19, S22, S67, S31 à S35) d'entraînement du vilebrequin (15) dans un sens de rotation arrière par la machine électrique tournante (20) pour faire tourner le vilebrequin (15) en arrière, dans lequel la commande de recul est effectuée entre un point où le moteur (10) est à l'arrêt et un point où le moteur (10) est démarré ultérieurement en effectuant l'opération de déclenchement de démarrage par l'organe de commande (70, 8), et Si **caractérisé en ce que** le procédé comprend en outre :
dans la commande de démarrage du vilebrequin (S61 à S67, S71), poursuivre l'alimentation de la machine électrique tournante (20) jusqu'à ce qu'un temps limite de démarrage prédéterminé, déterminé de telle sorte que le moteur (10) commence la combustion, s'écoule, même si l'opération de déclenchement de démarrage de l'organe de commande (70, 8) est supprimée, dans lequel, si, dans la commande de démarrage du vilebrequin (S61 à S67, S71), l'opération de déclenchement du démarrage de l'organe de commande (70, 8) est poursuivie jusqu'à ce que le temps limite de démarrage prédéterminé s'écoule sans que le moteur (10) ne commence la combustion, en continuant à alimenter la machine électrique tournante (20) jusqu'à ce que l'opération de déclenchement du démarrage soit supprimée.

2. Procédé selon la revendication 1, dans lequel, dans la commande de démarrage du vilebrequin (S61 à S67, S71), en réponse à l'opération de déclenchement de démarrage de l'organe de commande (70, 8) lorsque le moteur (10) est à l'état arrêté, l'alimentation de la machine électrique tournante (20) pour entraîner le vilebrequin (15) dans le sens de rotation vers l'avant pour démarrer le moteur (10) et, même si l'opération de déclenchement du démarrage de l'organe de commande (70, 8) est éliminée, continuer à alimenter la machine électrique tournante (20) jusqu'à ce que le temps limite de démarrage prédéterminé s'écoule, et arrêter l'alimentation de la machine électrique tournante (20) lorsque le temps limite de démarrage prédéterminé s'écoule sans que la combustion du moteur (10).

3. . Procédé selon les revendications 1 ou 2, dans lequel l'élément de commande comprend un interrupteur de démarrage (70) configuré pour être actionné par un opérateur afin de faire démarrer le moteur (10) et l'opération de déclenchement du démarrage est une opération continue de l'interrupteur de démarrage (70) qui atteint un temps prédéterminé ou dépasse le temps prédéterminé.

4. . Procédé selon l'une des revendications 1 à 3, comprenant en outre l'exécution d'une commande d'arrêt au ralenti (S17 à S18) pour arrêter la combustion par le moteur (10) afin d'entrer dans un état d'arrêt au ralenti lorsqu'une condition d'arrêt au ralenti est établie,
l'élément de commande comprend un élément de commande de l'accélérateur (8) qui est configuré pour être actionné par l'opérateur afin d'actionner un accélérateur du moteur (10), l'opération de déclenchement de démarrage comprend une opération de déclenchement de redémarrage prédéterminée de l'élément de commande de l'accélérateur (8) par l'opérateur, et
la commande de démarrage du vilebrequin (S61 à S67, S71) comprend une commande de redémarrage du vilebrequin (S62 à S67, S71) pour répondre à l'opération de déclenchement de redémarrage de l'organe de commande de l'accélérateur (8) dans l'état d'arrêt au ralenti.

5. . Procédé selon l'une des revendications 1 à 4, comprenant en outre l'exécution de la commande de retour en arrière (S19, S22, S67, S31 à S35) lorsque le démarrage du moteur (10) par la commande de démarrage du vilebrequin (S61 à S67, S71) échoue.

6. . Procédé selon l'une des revendications 1 à 5, dans lequel la machine électrique tournante (20) comprend en outre un rotor (30) configuré pour tourner en même temps que le vilebrequin (15) ; une pluralité de parties détectées (38) situées sur le rotor (30) à des intervalles dans un sens de rotation ; et un capteur électromagnétique (50), ayant une zone de détection dans une région traversée par la pluralité de parties détectées (38), pour générer des signaux de détection en accompagnement du passage des parties détectées (38) à travers la zone de détection ;
dans lequel le procédé consiste en outre à
exécuter un traitement de spécification de position (S7) consistant à spécifier une position du vilebrequin (15) à l'aide des signaux de détection générés par le capteur électromagnétique (50) et une commande de moteur (S8 à S16) consistant à commander le fonctionnement du moteur (10) à l'aide de la position spécifiée par le traitement de spécification de position (S7).

7. . Procédé selon la revendication 6, dans lequel le moteur est un moteur monocylindre à quatre temps (10), et
dans la commande du moteur (S8 à S16), commander le fonctionnement du moteur (10) sur la base de l'identification de la course à l'aide du traitement de spécification de la position (S7).

8. . Procédé selon la revendication 7, dans lequel la pluralité de parties détectées (38) sont disposées de telle sorte que le capteur électromagnétique (50) génère un signal de détection de référence à une position prédéterminée du vilebrequin de référence, et
dans le traitement de spécification de la position (S7), spécifier la position du vilebrequin (15) sur la base du signal de détection de référence généré par le capteur électromagnétique (50) après que le vilebrequin (15) a commencé à tourner dans le sens de rotation avant.

9. . Procédé selon l'une quelconque des revendications 6 à 8, dans lequel, dans la commande de recul (S19, S22, S67, S31 à S35), on fait tourner le vilebrequin (15) en sens inverse jusqu'à une position de recul prédéterminée en fonction de la position spécifiée par le traitement de spécification de position (S7).

10. . Unité de moteur (UE) pour un véhicule chevauché (1), l'unité de moteur (UE) comprenant : un moteur (10) avec un cylindre (12) et un vilebrequin (15) ;
une machine électrique tournante (20) couplée en puissance au vilebrequin (15), configurée pour être utilisée conjointement comme moteur de démarrage pour faire tourner le vilebrequin (15), et comme générateur pour générer de l'énergie électrique par une force de rotation du vilebrequin (15) ; et
un dispositif de commande (60) configuré pour commander le moteur (10) et la machine électrique tournante (20) et configuré pour exécuter un procédé de commande d'une unité de moteur (UE) pour un véhicule à enfourcher (1) selon l'une quelconque des revendications 1 à 9.

11. . Véhicule à enfourcher (1) comprenant :
l'unité de moteur (UE) selon la revendication 10 ;
une roue (3b) à laquelle la rotation du vilebrequin (15) est transmise ; et
un siège à enfourcher (5), dans lequel
l'organe de manoeuvre (70, 8) est inclus dans le véhicule à enfourcher (1).
